(19) 

**Europäisches Patentamt**

**European Patent Office**

**Office européen des brevets**

(11) **EP 4 672 624 A1**

(12) **EUROPEAN PATENT APPLICATION**
published in accordance with Art. 153(4) EPC

(43) Date of publication:
**31.12.2025 Bulletin 2026/01**

(21) Application number: **23924087.2**

(22) Date of filing: **24.02.2023**

(51) International Patent Classification (IPC):
***H04B 7/022*** (2017.01)     ***H04B 7/0456*** (2017.01)

(52) Cooperative Patent Classification (CPC):
**H04B 7/022; H04B 7/0456**

(86) International application number:
**PCT/JP2023/006745**

(87) International publication number:
**WO 2024/176437 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**
• **WANG, Jing**
  **Beijing 100190 (CN)**
• **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)     A terminal according to one aspect of the present disclosure includes: a receiving section that receives an index for channel state information (CSI) reporting of multiple transmission/reception points (TRPs) to be used for coherent joint transmission (CJT); and a control section that determines, based on the index, multiple values of one parameter among a first parameter related to the number of beams, a second parameter to be used for calculation of the number of frequency domain discrete Fourier transform (DFT) vectors, and a third parameter to be used for calculation of the number of selected CSI-reference signal (RS) ports, the multiple values corresponding to the multiple respective TRPs. According to one aspect of the present disclosure, it is possible to appropriately report CSI.

**FIG. 7A**

Separate table for $\{L_1,...,L_{N\_TRP}\}$

| Index | $L_1$ | $L_2$ | $L_3$ | $L_4$ |
|---|---|---|---|---|
| 1 | | | | |
| 2 | | | | |
| ... | | | | |
| M | | | | |

**(Cont. next page)**

EP 4 672 624 A1

## FIG. 7B

Separate table for $\{p_v, \beta\}$

| Index | $p_v$ | $\beta$ |
|-------|-------|---------|
| 1     |       |         |
| 2     |       |         |
| ...   |       |         |
| N     |       |         |

**Description**

Technical Field

The present disclosure relates to a terminal, a radio communication method, and a base station in next-generation mobile communication systems.

Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), reporting of channel state information (CSI) based on reference signal reception is under study. Enhancement of communication performance in a terminal (a user terminal, a User Equipment (UE)) that moves at high speed/middle speed is under study.

Meanwhile, studies have not sufficiently been made on CSI/codebook in such a terminal. Unless such a method is defined clearly, communication throughput, communication quality, and the like may deteriorate.

In view of this, an object of the present disclosure is to provide a terminal, a radio communication method, and a base station that determine appropriate CSI/codebook.

Solution to Problem

A terminal according to one aspect of the present disclosure includes: a receiving section that receives an index for channel state information (CSI) reporting of multiple transmission/reception points (TRPs) to be used for coherent joint transmission (CJT); and a control section that determines, based on the index, multiple values of one parameter among a first parameter related to the number of beams, a second parameter to be used for calculation of the number of frequency domain discrete Fourier transform (DFT) vectors, and a third parameter to be used for calculation of the number of selected CSI-reference signal (RS) ports, the multiple values corresponding to the multiple respective TRPs.

Advantageous Effects of Invention

According to one aspect of the present disclosure, it is possible to appropriately report CSI.

Brief Description of Drawings

[FIG. 1] FIG. 1 shows an example of a 16-level quantization table.
[FIG. 2] FIG. 2 shows an example of an 8-level quantization table.
[FIG. 3] FIGS. 3A and 3B show an example of a type 2 PS codebook/enhanced type 2 PS codebook.
[FIG. 4] FIGS. 4A and 4B show an example of a further enhanced type 2 PS codebook.

[FIG. 5] FIG. 5 shows an example of parameter combinations for enhanced type 2 codebook.

[FIG. 6] FIG. 6 shows an example of parameter combinations for further enhanced type 2 PS codebook.

[FIG. 7] FIGS. 7A and 7B show examples of separate parameter combinations according to embodiment #0.

[FIG. 8] FIGS. 8A and 8B show examples of a plurality of combination candidates for $L_n$ according to embodiment #0.

[FIG. 9] FIGS. 9A to 9C show examples of a plurality of candidates for $L_n$, $p_v$, $\beta$ according to embodiment #1.

[FIG. 10] FIGS. 10A and 10B show examples of a plurality of linkage candidates according to embodiment #3.

[FIG. 11] FIGS. 11A and 11B show an example of a plurality of combination candidates for $p_{v,n}$ according to option 1 of embodiment #6.

[FIG. 12] FIGS. 12A and 12B show an example of a plurality of combination candidates for $p_{v,n}$ according to option 2 of embodiment #6.

[FIG. 13] FIG. 13 shows an example of a plurality of combination candidates for $p_{v,n}$ according to option 3 of embodiment #6.

[FIG. 14] FIG. 14 is a diagram to show an example of a schematic structure of a radio communication system according to one embodiment.

[FIG. 15] FIG. 15 is a diagram to show an example of a structure of a base station according to one embodiment.

[FIG. 16] FIG. 16 is a diagram to show an example of a structure of a user terminal according to one embodiment.

[FIG. 17] FIG. 17 is a diagram to show an example of a hardware structure of the base station and the user terminal according to one embodiment.

[FIG. 18] FIG. 18 is a diagram to show an example of a vehicle according to one embodiment.

Description of Embodiments

(CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (Non Zero Power (NZP)) CSI-RS and CSI-Interference Management (CSI-Interface Measurement (CSI-IM)). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information), and may control, based on the report configuration information, CSI reporting. The report configuration information may be, for example, an information element (IE) "CSI-ReportConfig" of radio resource control (RRC). Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.

- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI (SP-CSI) report.

The report quantity information may indicate at least one combination of the above CSI parameters (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate frequency granularity of the CSI report. The frequency granularity may include, for example, a wideband and a subband. The wideband is the entire CSI reporting band. For example, the wideband may be the entire certain carrier (component carrier (CC), cell, serving cell), or may be the entire bandwidth part (BWP) in a certain carrier. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate a PMI of which of the wideband or the subband is to be reported (frequency domain information may include, for example, an RRC IE "pmi-FormatIndicator" used for determination of one of wideband PMI reporting and subband PMI reporting). The UE may determine, based on at least one of the report quantity information and the frequency domain information, frequency granularity of the CSI report (that is, one of the wideband PMI report or the subband PMI report).

When the wideband PMI report is configured (determined), one wideband PMI may be reported for the entire CSI reporting band. On the other hand, when the subband PMI report is configured, single wideband indication $i_1$ may be reported for the entire CSI reporting band, and subband indication (one subband indication) $i_2$ for each of one or more subbands in the entire CSI reporting (for example, subband indication for each subband) may be reported.

The UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the spatial domain (space domain), the CSI report may include CSI of one or more types. For example, the CSI may include at least one of a first type (type 1 CSI) used for selection of a single beam, and a second type (type 2 CSI) used for selection of multi-beam. The single beam may be interpreted as a single layer, and the multi-beam may be interpreted as a plurality of beams. The type 1 CSI may not assume multi-user multiple input multiple output (MU-MIMO), and the type 2 CSI may assume multi-user MIMO.

The above codebook may include a codebook for the type 1 CSI (also referred to as a type 1 codebook or the like) and a codebook for the type 2 CSI (also referred to as a type 2 codebook or the like). The type 1 CSI may include type 1 single-panel CSI and type 1 multi-panel CSI, and different codebooks (type 1 single-panel codebook, type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. UCI may be delivered on a PUCCH, or may be delivered on a PUSCH.

In Rel-15 NR, the UCI can include one CSI part for wideband PMI feedback. CSI report #n includes, if reported, PMI wideband information.

In Rel-15 NR, the UCI can include two CSI parts for subband PMI feedback. CSI part 1 includes wideband PMI information. CSI part 2 includes one piece of wideband PMI information and some pieces of subband PMI information. CSI part 1 and CSI part 2 are separately coded.

In Rel-15 NR, the UE is configured with N (N ≥ 1) report settings for CSI report configuration and M (M ≥ 1) resource settings for CSI resource configuration, by a higher layer. For example, the CSI report configuration (CSI-ReportConfig) includes a resource setting for channel measurement (resourcesForChannelMeasurement), a CSI-IM resource setting for interference (csi-IM-ResourceForInterference), an NZP-CSI-RS setting for interference (nzp-CSI-RS-ResourceForInterference), a report quantity (reportQuantity), and the like. Each of the resource setting for channel measurement, the CSI-IM resource setting for interference, and the NZP-CSI-RS setting for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource set or CSI-IM resource set).

For enabling, for both of FR1 and FR2, more dynamic channel/interference hypotheses for NCJT, assessment and specifications of CSI reporting for DL transmission with at least one of multi-TRP and multi-panel are under study.

(Codebook Configuration)

The UE is configured with a codebook-related parameter (codebook configuration (CodebookConfig)) by higher layer signaling (RRC signaling). The codebook configuration is included in a CSI report configuration (CSI-ReportConfig) of a higher layer (RRC) parameter.

In the codebook configuration, at least one codebook of a plurality of codebooks including a type 1 single panel (typeI-SinglePanel), type 1 multi-panel (typeI-MultiPanel), type 2 (typeII), and type 2 port selection (typeII-PortSelection) is selected.

The codebook parameter includes a parameter related to codebook subset restriction (CBSR) ("...Restriction" in CodebookConfig). Configuration of the CBSR is a bit indicating, for a precoder associated with a CBSR bit, which PMI report is allowed ("1") and which PMI report is not allowed ("0"). 1 bit of a CBSR bitmap corresponds to one codebook index/antenna port.

(CSI Report Configuration)

CSI report configuration (CSI-ReportConfig) of Rel. 16 includes CSI-RS resources for channel measurement (resourcesForChannelMeasurement (CMRs)), CSI-RS resources for interference measurement (csi-IM-ResourcesFor-Interference (ZP-IMRs), nzp-CSI-RS-ResourcesForInterference (NZP-IMRs)), and the like, in addition to a codebook configuration (CodebookConfig). The parameters of CSI-ReportConfig excluding codebookConfig-r16 are also included in CSI report configuration of Rel. 15.

For Rel. 17, enhanced CSI report configuration (CSI-ReportConfig) for multi-TRP CSI measurement/reporting using NCJT is under study. In the CSI report configuration, two CMR groups corresponding to two respective TRPs are configured. CMRs in the CMR groups may be used for measurement of at least one of multi-TRP using NCJT and a single TRP. N CMR pairs for NCJT are configured by RRC signaling. Whether CMRs of a CMR pair are to be used for single TRP measurement may be configured for the UE by RRC signaling.

For CSI reporting associated with multi-TRP/panel NCJT measurement and configured by a single CSI report configuration, support of at least one of Options 1 and 2 below is under study.

<Option 1>

The UE is configured to report X (X = 0, 1, 2) pieces of CSI associated with single TRP measurement hypotheses and one piece of CSI associated with NCJT measurement. When X = 2, two pieces of CSI are associated with two different single TRP measurements using CMRs of different CMR groups.

<Option 2>

The UE may be configured to report one piece of CSI associated with the best measurement result of measurement hypotheses for NCJT and a single TRP.

As described above, in Rel. 15/16, CBSR is configured for each codebook configuration for each CSI report configuration. In other words, the CBSR is applied to all the CMRs and the like in corresponding CSI reporting configuration.

Note, however, that there is a possibility that when the Options 1 and 2 above are applied to multi-TRP CSI report configuration of Rel. 17 by CSI report configuration, configuration of the following measurement is performed.

Option 1 (X = 0): measurement of only CSI for NCJT
Option 1 (X = 1): measurement of CSI for NCJT and CSI for single TRP (one TRP)
Option 1 (X = 2): measurement of CSI for NCJT and CSI for single TRP (two TRPs)
Option 2: measurement of both of CSI for NCJT and CSI for single TRP

Multiple subbands for CSI report #n indicated and given by a higher layer parameter csi-ReportingBand may be sequentially numbered in an ascending order while including the lowest subband of csi-ReportingBand as subband 0.

(Type 1 Codebook)

As a type 1 codebook (Rel. 15), a type 1 single-panel codebook and a type 1 multi-panel codebook are defined for a base station panel. In a type 1 single panel, an antenna model of a CSI antenna port array (logical configuration) is

defined for $(N_1, N_2)$. The number $P_{CSI-RS}$ of CSI-RS antenna ports is $2N_1N_2$. In type 1 multi-panel, an antenna model of a CSI antenna port array (logical configuration) is defined for the number $P_{CSI-RS}$ of CSI-RS antenna ports and $(N_g, N_1, N_2)$.

For Rel-15 type 1 single-panel CSI, a higher layer parameter of a codebook type (subType in type1 in codebookType in CodebookConfig) is set to a type 1 single panel ('type1-SinglePanel') for the UE. When the number v of layers $\in \{2, 3, 4\}$ is not satisfied, PMI values correspond to three codebook indices $i_{1,1}, i_{1,2}, i_2$. When the number v of layers $\in \{2, 3, 4\}$ is satisfied, PMI values correspond to four codebook indices $i_{1,1}, i_{1,2}, i_{1,3}, i_2$. When the number v of layers $\in \{2, 3, 4\}$ is not satisfied, composite codebook index $i_1 = [i_{1,1}\ i_{1,2}]$. When the number v of layers $\in \{2, 3, 4\}$ is satisfied, composite codebook index $i_1 = [i_{1,1}\ i_{1,2}\ i_{1,3}]$. $i_1$ may denote an index for wideband. $i_2 = n$ may denote an index for subband/phase.

For $P_{CSI-RS}$, supported configurations (value combinations) of $(N_1, N_2)$ and $(O_1, O_2)$ are defined in a specification. $(N_1, N_2)$ indicates the number of two-dimensional (2D) antenna elements, and is configured by a higher layer parameter n1-n2 in moreThanTwo in nrOfAntennaPorts in type1-SinglePanel. n1-n2 denotes an $N_1O_1N_2O_2$-bit bitmap parameter. $(O_1, O_2)$ is a 2D oversampling factor.

In a codebook for 1-layer CSI reporting and codebook mode (codebookMode) = 1, index $i_{1,1}$ for horizontal beam satisfies $i_{1,1} = l = 0, 1, ..., N_1O_1 - 1$, index $i_{1,2}$ for vertical beam satisfies $i_{1,2} = m = 0, 1, ..., N_2O_2 - 1$, $i_2$ satisfies $i_2 = n = 0, 1, 2, 3$, and a matrix for 1-layer CSI report codebook using antenna ports 3000 to $(2999 + P_{CSI-RS})$ is denoted by $W\_i_{1,1}, i_{1,2}, i_2{}^{(1)}$. Here, $W_{l,m,n}{}^{(1)}$ is given by the following equation.

$$W_{l,m,n}^{(1)} = \frac{1}{\sqrt{P_{\text{CSI-RS}}}} \begin{bmatrix} v_{l,m} \\ \varphi_n v_{l,m} \end{bmatrix} \qquad\qquad (E1)$$

Here, $v_{l,m}$ denotes an element (SD basis) of an $N_1$-row $N_2$-column 2D-SD (DFT) basis vectors (matrix, $\exp(j2\pi l n_1/O_1N_1) \times \exp(j2\pi m n_2/O_2N_2)$, $n_1 = 0, 1, ..., N_1 - 1$, $n_2 = 0, 1, ..., N_2 - 1$). Co-phasing $\varphi_n$ between polarizations (horizontal polarization and vertical polarization) is $\varphi_n = \exp(j\pi n/2)$ and indicates the phase of another polarization with respect to the phase of one polarization.

For Rel-15 type 1 multi-panel CSI, as compared with that for the type 1 single panel, the number $N_g$ of panels is configured in addition to $N_1, N_2$. As inter-panel co-phasing (phase compensation between panels), $i_{1,4}$ is additionally reported. The same SD beam (precoding matrix $W_l$) is selected for each panel, and only inter-panel co-phasing is additionally reported.

For $P_{CSI-RS}$, supported configurations (value combinations) of $(N_g, N_1, N_2)$ and $(O_1, O_2)$ are defined in a specification. $(N_1, N_2)$ is configured by ng-n1-n2 in type1-MultiPanel. $i_{1,1}$ is $\{0, 1, ..., N_1O_1-1\}$. $i_{1,2}$ is $\{0, 1, ..., N_2O_2-1\}$. For q = 1, ..., $N_g$ - 1, $i_{1,4,q}$ is $\{0, 1, 2, 3\}$. $i_2$ is $\{0, 1, 2, 3\}$. For codebookMode = 1, a matrix for a 1-layer CSI report codebook using antenna ports 3000 to $(2999 + P_{CSI-RS})$ is $W\_i_{1,1}, i_{1,2}, i_{1,4}, i_2{}^{(1)}$. Here, $W_{l,m,p,n}{}^{(1)} = W_{l,m,p,n}{}^{1,N_g,1}$.

$W\_l,m,p,n{}^{1,N_g,1}$ and $W\_l,m,p,n{}^{2,N_g,1}$ for $N_g = \{2, 4\}$ (matrix $W_{l,m,p,n}{}^{1,2,1}$ for the first layer, $N_g = 2$, and codeBookMode = 1, matrix $W_{l,m,p,n}{}^{2,2,1}$ for the second layer, $N_g = 2$, and codeBookMode = 1, matrix $W_{l,m,p,n}{}^{1,4,1}$ for the first layer, $N_g = 4$, and codeBookMode = 1, and matrix $W_{l,m,p,n}{}^{2,4,1}$ for the second layer, $N_g = 4$, and codeBookMode = 1) are given by the following equations.

$$W^{1,2,1}_{l,m,p,n} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \end{bmatrix} \qquad W^{2,2,1}_{l,m,p,n} = \frac{1}{\sqrt{P_{\text{CSI-RS}}}} \begin{bmatrix} v_{l,m} \\ -\varphi_n v_{l,m} \\ \varphi_{p_1} v_{l,m} \\ -\varphi_n \varphi_{p_1} v_{l,m} \end{bmatrix}$$

$$W^{1,4,1}_{l,m,p,n} = \frac{1}{\sqrt{P_{\text{CSI-RS}}}} \begin{bmatrix} v_{l,m} \\ \varphi_n v_{l,m} \\ \varphi_{p_1} v_{l,m} \\ \varphi_n \varphi_{p_1} v_{l,m} \\ \varphi_{p_2} v_{l,m} \\ \varphi_n \varphi_{p_2} v_{l,m} \\ \varphi_{p_3} v_{l,m} \\ \varphi_n \varphi_{p_3} v_{l,m} \end{bmatrix} \qquad W^{2,4,1}_{l,m,p,n} = \frac{1}{\sqrt{P_{\text{CSI-RS}}}} \begin{bmatrix} v_{l,m} \\ -\varphi_n v_{l,m} \\ \varphi_{p_1} v_{l,m} \\ -\varphi_n \varphi_{p_1} v_{l,m} \\ \varphi_{p_2} v_{l,m} \\ -\varphi_n \varphi_{p_2} v_{l,m} \\ \varphi_{p_3} v_{l,m} \\ -\varphi_n \varphi_{p_3} v_{l,m} \end{bmatrix}$$

(E2)

Here, $\varphi_n = e^{j\pi n/2}$. For $N_g = 2$, $p = p_1$, and for $N_g = 4$, $p = [p_1, p_2, p_3]$. $\varphi\_p_1$, $\varphi\_p_2$, and $\varphi\_p_3$ indicate inter-panel co-phasing. The same beam (SD beam matrix, precoding matrix $W_1$) is selected for panels 0, 1, 2, and 3, and $\varphi\_p_1$, $\varphi\_p_2$, and $\varphi\_p_3$ indicate phase compensation for panel 1, phase compensation for panel 2, and phase compensation for panel 3 relative to panel 0, respectively.

(Type 2 Codebook)

In the present disclosure, matrix Z with X rows and Y columns is sometimes expressed as Z(X × Y).
For type 2 CSI of Rel. 15, generation of per-subband (SB-wise) precoding vectors is based on the following equation for given layer l.

$$W_l(N_t \times N_3) = W_1 W_{2,l} \qquad (F1)$$

Nt denotes the number of antennas/antenna ports. $N_3$ is a total number of precoding (beamforming) matrices (precoders) (number of subbands) indicated by a PMI.
$W_1(N_t \times 2L)$ denotes $L \in \{2, 4\}$ (oversampled) spatial domain (SD) vectors (SD 2D-DFT vectors, SD beams, SD matrix). L is the number of beams. The actual number of beams taking account of a horizontal polarization and a vertical polarization at one point is 2L. For example, L = 2 respective SD 2D-DFT vectors are $b_i$ and $b_j$.
$W_{2,l}(2L \times N_3)$ denotes a matrix (LC coefficient matrix) formed by linear combination (LC) coefficients (subband complex LC coefficients, combination coefficients) for layer l. $W_{2,l}$ indicates beam selection and co-phasing between two polarizations. For example, two respective $W_{2,l}$ are $c_i$ and $c_j$. For example, channel vector h is approximated by linear combination of L = 2 SD 2D-DFT vectors $c_i b_i + c_j b_j$. Feedback overhead is primarily caused by LC coefficient matrix $W_{2,l}$. The type 2 CSI of Rel. 15 supports only ranks 1 and 2.
In type 2 CSI, a channel (channel matrix) for a given user is expressed by linear combination of two polarizations and L beams (L SD 2D-DFT vectors). The type 2 CSI of Rel. 15 supports ranks 1 and 2.

(Enhanced Type 2 Codebook (Rel. 16))

Type 2 CSI of Rel. 16 (enhanced type 2 codebook) reduces overhead related to $W_{2,l}$ by using frequency domain (FD) compression. The type 2 CSI of Rel. 16 supports ranks 3 and 4 in addition to ranks 1 and 2.

For the type 2 CSI of Rel. 16, information based on the following equation may be reported by a UE for given layer l.

$$W_1 = W_1 W\tilde{}_1 W_{f,1}{}^H \quad (F2)$$

$W_{2,l}$ is approximated by $W\tilde{}_l W_{f,l}{}^H$. Matrix $W\tilde{}$ may be expressed by adding $\sim$ to the top of W (tilde on w). $W\tilde{}_l$ may be expressed as $W\tilde{}_{2,l}$. Matrix $W_{f,l}{}^H$ is an adjoint matrix of $W_{f,l}$ and is obtained by conjugate transpose of $W_{f,l}$.

For a CSI report, the UE may be configured with one of two subband sizes. The subband (CQI subband) may be defined as $N_{PRB}{}^{SB}$ consecutive PRBs, and may depend on a total number of PRBs in a BWP. The number R of PMI subbands per CQI subband is configured by an RRC IE (numberOfPMI-SubbandsPerCQI-Subband). R controls a total number $N_3$ of precoding matrices indicated by a PMI, as a function of the number of subbands configured in csi-ReportingBand, a subband size configured by subbandSize, and a total number of PRBs in a BWP.

$W_1(N_t \times 2L)$ denotes a plurality of (oversampled) SD 2D-DFT vectors (matrix). To express this matrix, a plurality of indices of SD 2D-DFT vectors and a two-dimensional over-sampling factor are reported. Response/distribution of a spatial domain indicated by an SD 2D-DFT vector may be referred to as an SD beam.

$W\tilde{}_l(2L \times M_v)$ is a matrix formed by LC coefficients. To express this matrix, up to $K_0$ non-zero coefficients (NZCs) (non-zero amplitude LC coefficients) are reported. The report is formed by two parts: a bitmap for identifying an NZC location, and a quantized NZC.

$W_{f,l}(N_3 \times M_v)$ is a matrix formed by $M_v$ vectors (frequency domain (FD) basis vectors for layer l, and each vector includes $N_3$ FD bases. $N_3$ is a total number of precoding (beamforming) matrices (precoders) (number of subbands) indicated as a function of the number of subbands configured in csi-ReportingBand, by a PMI. When CSI for a given BWP is reported, csi-ReportingBand indicates consecutive or nonconsecutive subbands in the BWP. $M_v$ FD basis (FD DFT base) vectors are present for each layer. When $N_3 > 19$, $M_v$ FD bases from an intermediate subset (InS) of size $N_3'$ ($< N_3$) are selected. When $N_3 \le 19$, $\log2(C(N_3 - 1, M_v - 1))$ bits are reported. Here, $C(N_3 - 1, M_v - 1)$ denotes the number of combinations (combinatorial coefficient $C(x, y)$) to select ($M_v - 1$) from ($N_3 - 1$), and is also referred to as binomial coefficients.

Response/distribution (frequency response) of a frequency domain indicated by an FD basis vector and linear combination of LC coefficients may be referred to as an FD beam. The FD beam may correspond to a delay profile (time response).

A PMI subband size is given by a CQI subband size/R, and $R \in \{1, 2\}$. The number $M_v$ of FD basis vectors for given rank v is given by $\text{ceil}(p_v \times N_3/R)$. The number of FD bases is the same for all the layers $l \in \{1, 2, 3, 4\}$. $p_v$ is configured by a higher layer.

A multi-precoding matrix indicated by a PMI is determined from ($L + M_v$) vectors.

L SD basis vector elements (SD bases) $v_{m\_1^{(i)},m\_2^{(i)}}$ for beam index i = 0, 1, ..., L - 1 are identified by $q_1$, $q_2$, $n_1$, and $n_2$ and indicated by $i_{1,1}$ and $i_{1,2}$.

$M_v$ FD basis vectors are identified by $M_{initial} \in \{-2M_v + 1, -2M_v + 2, ..., 0\}$, $n_{3,l} = [n_{3,l}{}^{(0)}, ..., n_{3,l}{}^{(M\_v-1)}]$, and $n_{3,l}{}^{(f)} \in \{0, 1, ..., N_3 - 1\}$.

Index t associated with a precoding matrix (subband) = 0, 1, ..., $N_3$ - 1 and FD basis vector elements (FD bases) for layer l = 1, ..., v satisfy $y_{t,l}{}^{(f)} = \exp(j2\pi t n_{3,l}{}^{(f)}/N_3)$. Among $M_v$ FD basis vectors, FD basis vectors for index f associated with an FD basis vector = 0, 1, ..., $M_v$ - 1 are $[y_{0,l}{}^{(f)}, y_{1,l}{}^{(f)}, ..., y_{N\_3-1,l}{}^{(f)}]^T$.

Each row of matrix $W_{2,l}$ indicates channel frequency response of a specific SD beam. When the SD beam has high directivity, a channel tap per beam is limited (power delay profile becomes sparse in the time domain). As a result, channel frequency response for each SD beam has high correlation (becomes close to a flat form in the frequency domain). In this case, the channel frequency response can be approximated by linear combination of a small number of FD basis vectors. For example, when $M_v = 2$, by using FD basis vectors $f_2$, $f_q$ and LC coefficients $d_1{}^0$, $d_2{}^0$, frequency response associated with SD beam $b_0$ is approximated by $d_1{}^0 f_2 + d_2{}^0 f_q$.

Dominant $M_v$ FD basis vectors are selected. With $M_v << N_3$, overhead of $W\tilde{}_l$ is much smaller than overhead of $W_{2,l}$. All or some of the $M_v$ FD basis vectors are used to approximate frequency response of each SD beam. A bitmap is used to report only an FD basis vector selected for each SD beam. If no bitmap is reported, all the FD basis vectors are selected for each SD beam. In this case, NZCs of all the FD basis vectors are reported for each SD beam. The number $K_l{}^{NZ}$ of NZCs in one layer $\le K_0 = \text{ceil}(\beta \times 2LM_v)$, and the number $K^{NZ}$ of NZCs over all the layers $\le 2K_0 = \text{ceil}(\beta \times 2LM_v)$. $\beta$ is configured by a higher layer.

In an enhanced type 2 codebook of Rel. 16, values of L, $\beta$, and $p_v$ (combination of codebook parameters, parameter combination) are determined by a higher layer parameter paramCombination-r16 (codebook combination configuration).

Type 2 CSI feedback on a PUSCH in Rel. 16 includes two parts. CSI part 1 has a fixed payload size, and is used to identify the number of information bits in CSI part 2. A size of part 2 is variable (UCI size depends on the number of NZCs that is not recognized a base station). In CSI part 1, the UE reports the number of NZCs that determines the size of CSI part 2. After receiving CSI part 1, the base station recognizes the size of CSI part 2.

In enhanced type 2 CSI feedback of Rel. 16, CSI part 1 includes an RI (if reported), a CQI, and an indication of a total number of non-zero amplitudes over multiple layers for enhanced type 2 CSI. The RI (if reported), the CQI, and the indicator of the total number of non-zero amplitudes over multiple layers, which are fields of part 1, are separately coded. CSI part 2 includes a PMI of enhanced type 2 CSI. Parts 1 and 2 are separately coded. CSI part 2 (PMI) includes at least one of an oversampling factor, an index of an SD (2D-DFT) basis, an index $M_{initial}$ of an initial FD (DFT) basis vector (start offset) of a selected DFT window, an FD basis selected for each layer, an NZC (amplitude and phase) per layer, a strongest (maximum strength, strongest amplitude) coefficient indicator (SCI) per layer, and amplitude of the strongest coefficient per layer/per polarization.

A plurality of PMI indices (PMI values, codebook indices) associated with different pieces of CSI part 2 information may follow the following for the l-th layer.

- $i_{1,1}$: two-dimensional oversampling factor [q1 q2]. $q_1 \in \{0, 1, ..., O_1 - 1\}$, $q_2 \in \{0, 1, ..., O_2 - 1\}$.
- $i_{1,2}$: plurality of indices of SD 2D-DFT bases (SD beams). $i_{1,2} \in \{0, 1, ..., C(N_1N_2, L) - 1\}$.
- $i_{1,5}$: codebook indicator. Index of an FD DFT basis of a selected DFT window $i_{1,5} \in \{0, 1, ..., 2M_v - 1\}$.
- $i_{1,6,l}$: codebook indicator. FD DFT basis selected for the l-th layer When $N_3 \leq 19$, $i_{1,6,l} \in \{0, 1, ..., C(N_3 - 1, M_v - 1) - 1\}$. When $N_3 > 19$, $i_{1,6,l} \in \{0, 1, ..., C(2M_v - 1, M_v - 1) - 1\}$.
- $i_{1,7,l}$: bitmap indicator for the l-th layer. A non-zero bit in the bitmap identifies which coefficient in $i_{2,4,l}$ and $i_{2,5,l}$ is to be reported. $i_{1,7,l} = [k_{l,0}^{(3)} ... k_{l,M\_v-1}^{(3)}]$, $k_{l,f}^{(3)} = [k_{l,0,f}^{(3)} ... k_{l,M\_v-1,f}^{(3)}]$, $k_{l,i,f}^{(3)} \in \{0, 1\}$.
- $i_{1,8,l}$: strongest coefficient indicator for the l-th layer (largest element $k_{l,i,f}^{(2)}$ of amplitude coefficient indicators).
- $i_{2,3,l}$: amplitude coefficient indicator of the coefficient (wideband) (of both polarizations) of the l-th layer. $i_{2,3,l} = [k_{l,0}^{(1)} k_{l,1}^{(1)}]$.
- $i_{2,4,l}$: amplitude coefficient indicator of a reported coefficient (subband) of the l-th layer. $i_{2,3,l} = [k_{l,0}^{(2)} ... k_{l,M\_v-1}^{(2)}]$.
- $i_{2,5,l}$: phase coefficient indicator of the coefficient (subband) of the l-th layer. $i_{2,5,l} = [c_{l,0,f} ... c_{l,M\_v-1,f}]$.

$f_l^* \in \{0, 1, ..., M_v - 1\}$ is assumed as the index of $i_{2,4,l}$, and $i_l^* \in \{0, 1, ..., 2L - 1\}$ is assumed as the index of $k_{l,f\_l^{*}}^{(2)}$. $f_l^*$ and $i_l^*$ above identify the strongest coefficient for layer l = 1, ..., v, in other words, element $k_{l,i\_l^{*},f\_l^{*}}^{(2)}$ of $i_{2,4,l}$ for layer l. Codebook index $n_{3,l}$ is remapped as $n_{3,l}^{(f)} = (n_{3,l}^{(f)} - n_{3,l}^{(f\_l^{*})})$ mod N3 with respect to $n_{3,l}^{(f\_l^{*})}$ and results in $n_{3,l}^{(f\_l^{*})} = 0$ after the remapping. Index f is remapped as $f = (f - f_l^*)$ mod $M_v$ with respect to $f_l^*$ and results in $f_l^* = 0$ (l = 1, ..., v) after the remapping. $i_{2,4,l}$, $i_{2,5,l}$, and $i_{1,7,l}$ respectively indicate an amplitude coefficient, a phase coefficient, and a bitmap after remapping. The strongest coefficient of layer l identified by $i_{1,8,l} \in \{0, 1, ..., 2L - 1\}$ is given as $i1,8,l = \sum_{i=0}^{i\_l^{*}} k_{l,i,0}^{(3)} - 1$ for v = 1 and $i_{1,8,l} = i_l^*$ for $1 < v \leq 4$.

Each reported LC coefficient (complex coefficient) in $\tilde{W}_l$ is separately quantized amplitude and phase.

- Amplitude Quantization

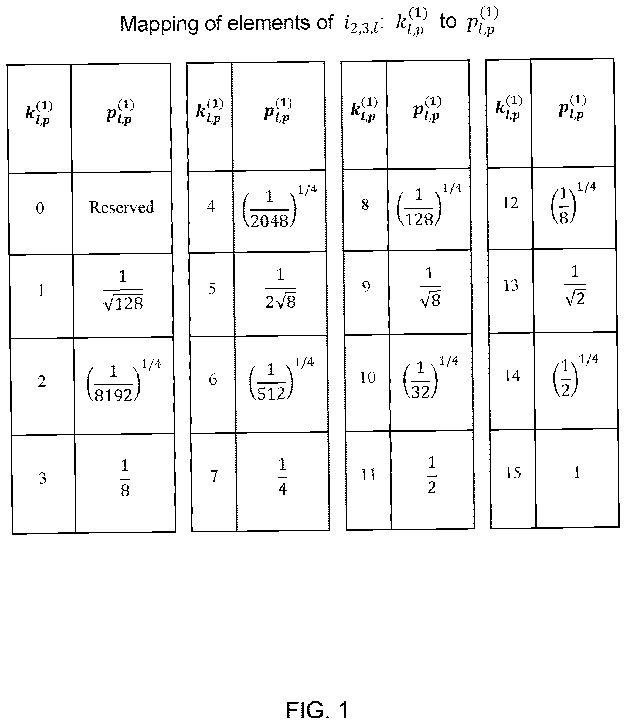

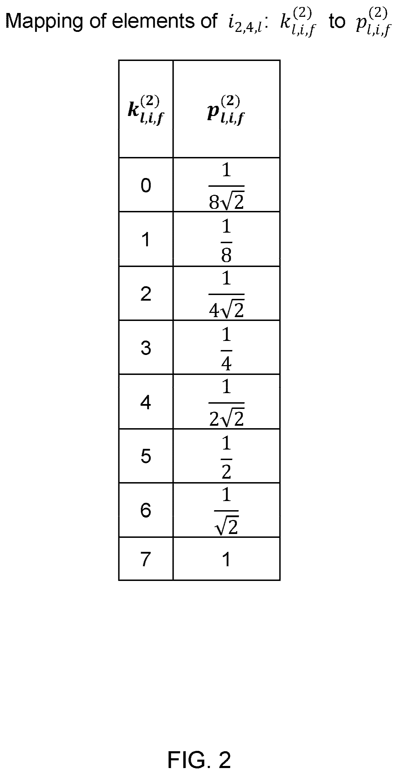

Polarization-specific reference amplitude is 16-level quantization using a table in FIG. 1 (mapping of elements in amplitude coefficient indicator $i_{2,3,l}$: mapping from amplitude coefficient indicator element $k_{l,p}^{(1)}$ to amplitude coefficient $p_{l,p}^{(1)}$). With this table, $p_l^{(1)} = [p_{l,0}^{(1)} p_{l,1}^{(1)}]$ is quantized to $[k_{l,0}^{(1)} k_{l,1}^{(1)}]$, $k_{l,p}^{(1)} \in \{0, ..., 15\}$. All the other coefficients are 8-level quantization using a table in FIG. 2 (mapping of elements of amplitude coefficient indicator $i_{2,4,l}$: mapping from amplitude coefficient indicator element $k_{l,i,f}^{(2)}$ to amplitude coefficient $p_{l,i,f}^{(2)}$). With this table, $p_l^{(2)} = [p_{l,0}^{(2)} ... p_{l,M\_v-1}^{(2)}]$ and $p_{l,f}^{(2)} = [p_{l,0,f}^{(2)} ... p_{l,2L-1,f}^{(2)}]$ are quantized to $k_{l,f}^{(2)} = [k_{l,0,f}^{(2)} ... k_{l,2L-1,f}^{(2)}]$, $kl,i,f(2) \in \{0, ..., 7\}$.

- Phase Quantization

Elements in amplitude coefficient indicator $i_{2,5,l}$ (amplitude coefficient indicator elements) $[c_{l,0} ... c_{l,M\_v-1}]$ is reported by a UE (by using 4 bits). All the coefficients are quantized by using 16-PSK. The phase coefficient in quantity $\varphi_{l,i,f}$ = $\exp(j2\pi c_{l,i,f}/16)$ for co-phasing is quantized to $c_{l,f} = [c_{l,0,f} ... c_{l,2L-1,f}]$, $c_{l,i,fi} \in \{0, ..., 15\}$.

Amplitude coefficient indicator element $k_{l,floor(i\_l^{*}/L)}^{(1)}$ = 15 (maximum value), amplitude indicator element $k_{l,i\_l^{*},0}^{(2)}$ = 7 (maximum value), and phase coefficient indicator element $c_{l,i\_l^{*},0}^{(2)}$ = 0 (minimum value), for the strongest coefficient of layer l. For l = 1, ..., v, $k_{l,floor(i\_l^{*}/L)}^{(1)}$, $k_{l,i\_l^{*},0}^{(2)}$, and $c_{l,i\_l^{*},0}^{(2)}$ = 0 are not reported.

$i_{1,5}$ and $i_{1,6,l}$ are PMI indices for FD DFT basis reporting. $i_{1,5}$ is reported only when $N_3 > 19$.

Matrix $W^{(v)}$ expressed by a codebook for v (= 1 to 4) layer CSI reporting using 3000 to (2999 + $P_{CSI-RS}$) is based on matrix $W^l$ expressed by the following equation for layer l (= 1 to v).

$$W^l_{q_1,q_2,n_1,n_2,n_{3,l},p^{(1)}_l,p^{(2)}_l,i_{2,5,l},t}$$

$$= \frac{1}{\sqrt{N_1 N_2 \gamma_{t,l}}} \begin{bmatrix} \sum_{i=0}^{L-1} v_{m_1^{(i)},m_2^{(i)}} p^{(1)}_{l,0} \sum_{f=0}^{M_v-1} y^{(f)}_{t,l} p^{(2)}_{l,i,f} \varphi_{l,i,f} \\ \sum_{i=0}^{L-1} v_{m_1^{(i)},m_2^{(i)}} p^{(1)}_{l,1} \sum_{f=0}^{M_v-1} y^{(f)}_{t,l} p^{(2)}_{l,i+L,f} \varphi_{l,i+L,f} \end{bmatrix}, l = 1,2,3,4,$$

$$\gamma_{t,l} = \sum_{i=0}^{2L-1} \left( p^{(1)}_{l,\lfloor\frac{i}{L}\rfloor} \right)^2 \left| \sum_{f=0}^{M_v-1} y^{(f)}_{t,l} p^{(2)}_{l,i,f} \varphi_{l,i,f} \right|^2$$

$$(G1)$$

Here, beam index i = 0, 1, ..., L - 1, $m_1^{(i)} = O_1 n_1^{(i)} + q_1$, $m_2^{(i)} = O_2 n_2^{(i)} + q_2$, $n_1^{(i)} \in \{0, 1, ..., N_1 - 1\}$, and $n_2^{(i)} \in \{0, 1, ..., N_2 - 1\}$. $v_{m\_1^{\wedge}(i),m\_2^{\wedge}(i)}$ indicates an SD 2D-DFT basis, $p_{l,0}^{(1)}$ and $p_{l,i,f}^{(2)}$ indicate amplitude coefficients, and $\varphi_{l,i,f}$ indicates a phase coefficient. As described above, the codebook for each layer includes the strongest coefficient for each polarization, an amplitude coefficient for each SD-DFT basis for each FD-DFT basis for each polarization, and a phase coefficient for each SD-DFT basis for each FD-DFT basis for each polarization.

As grouping of CSI parts 2, for a given CSI report, PMI information is grouped into three groups (groups 0 to 2). This is important for a case where CSI omission is performed. Each reported element of indices $i_{2,4,l}$, $i_{2,5,l}$, and $i_{1,7,l}$ is associated with a specific priority rule. Groups 0 to 2 follow the following.

- Group 0: indices $i_{1,1}$, $i_{1,2}$ and $i_{1,8,l}$ (l = 1, ..., v)
- Group 1: highest (higher) $v2LM_v$ - floor($K^{NZ}/2$) priority elements in index $i_{1,5}$ (if reported) and indices $i_{1,6,l}$ and $i_{1,7,l}$ (if reported), highest (higher) ceil($K^{NZ}/2$) - v priority elements in $i_{2,3,l}$ and $i_{2,4,l}$, and highest (higher) ceil ($K^{NZ}/2$) - v priority elements in $i_{2,5,l}$ (l = 1, ..., v)
- Group 2: lowest (lower) floor ($K^{NZ}/2$) priority elements in $i_{1,7,l}$, lowest (lower) floor ($K^{NZ}/2$) priority elements in $i_{2,4,l}$, and lowest (lower) floor ($K^{NZ}/2$) priority elements in $i_{2,5,l}$ (l = 1, ..., v)

In type 1 CSI, an SD beam indicated by an SD DFT vector is transmitted to the UE. In type 2 CSI, L SD beams are linearly coupled and transmitted to the UE. Each SD beam can be associated with a plurality of FD beams. For corresponding SD beams, channel frequency response can be obtained by using linear combination of FD basis vectors for the SD beams. The channel frequency response corresponds to the power delay profile.

(Type 2 Port Selection Codebook/Enhancement (Rel. 16)/Further Enhancement (Rel. 17))

- Type 2 Port Selection Codebook

In type 2 port selection (PS) CSI of Rel. 15 (type 2 PS codebook), a UE need not derive an SD beam in consideration of 2D-DFT as in type 2 CSI. A base station transmits CSI-RSs by using K CSI-RS ports beamformed in consideration of a set of SD beams. The UE selects/identifies the best L ($\leq$ K) CSI-RS ports for each polarization, and reports indices of these ports in $W_1$. The type 2 PS CSI of Rel. 15 supports ranks 1 and 2.

- Enhanced Type 2 Port Selection Codebook

Operation of type 2 PS CSI (enhanced type 2 PS codebook) of Rel. 16 is similar to that of type 2 CSI of Rel. 16 except for selection of an SD beam. The type 2 PS CSI of Rel. 15 supports ranks 1 to 4.

For layer l $\in$ {1, 2, 3, 4}, per-subband (subband (SB)-wise) precoder generation is given by the following equation.

$$W_1(N_t \times N_3) = QW_1\tilde{W}_1 W_{f,1}^H \quad (H1)$$

Here, Q(Nt × K) indicates K SD beams used for CSI-RS beamforming. $W_1$(K × 2L) is a block diagonal matrix. $\tilde{W}_l$ (2L × M) is an LC coefficient matrix. $W_{f,l}$($N_3$ × M) is a matrix formed by M vectors (FD basis vectors), and each vector includes $N_3$ FD bases. K is configured by a higher layer. L is configured by a higher layer. $P_{CSI-RS} \in$ {4, 8, 12, 16, 24, 32}. When $P_{CSI-RS} > 4$, L $\in$ {2, 3, 4}.

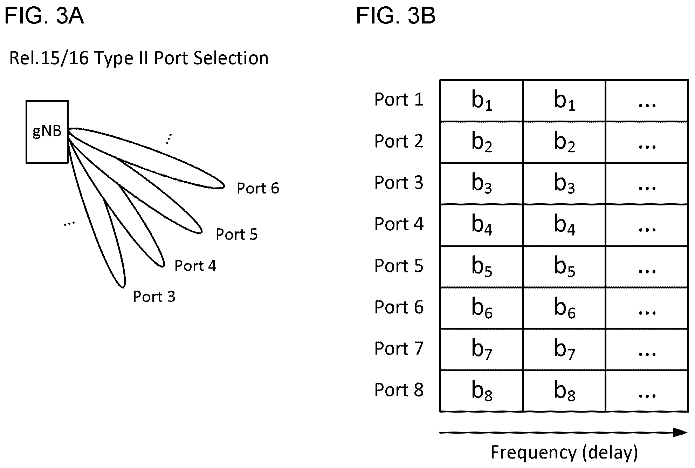

In type 2 PS CSI of Rel. 15/16, each CSI-RS port #i is associated with an SD beam ($b_i$) (FIGS. 3A and 3B).

By reducing the number of FD basis vectors from $N_3$ to $M_v$ ($M_v << N_3$) similarly to type 2 CSI of Rel. 16, the type 2 PS CSI of Rel. 16 can reduce overhead compared with that of type 2 PS CSI of Rel. 15,

- Further Enhanced Type 2 Port Selection Codebook

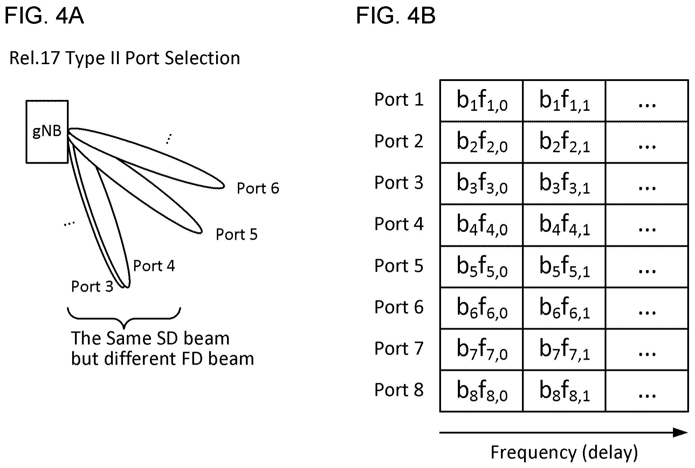

In type 2 PS CSI/codebook of Rel. 17 (further enhanced type 2 PS codebook), each CSI-RS port #i is associated with an SD-FD beam pair (pair of SD beam $b_i$ and FD beam $f_{i,j}$ (where j is a frequency index)) in place of an SD beam (FIGS. 4A and 4B). In this example, ports 3 and 4 are associated with the same SD beam and are associated with different FD beams.

Frequency selectivity of channel frequency response observed by the UE, based on an SD beam-FD beam pair can be reduced by delay pre-compensation more than frequency selectivity of channel frequency response observed by the UE, based on an SD beam.

A primary scenario for the type 2 PS codebook of Rel. 17 is FDD. Channel reciprocity based on SRS measurement is not perfect (in FDD where UL beam and DL beam may be different in angle, a UL frequency and a DL frequency are different from each other, and the UL frequency and the DL frequency have different effective antenna spacings). However, the base station can obtain/select several pieces of partial information (dominant angle and delay (SD beam and FD beam)). By using SRS measurement by the base station in addition to CSI reporting, the base station can obtain CSI for determination of a DL MIMO precoder. In this case, some CSI reports may be omitted to reduce CSI overhead.

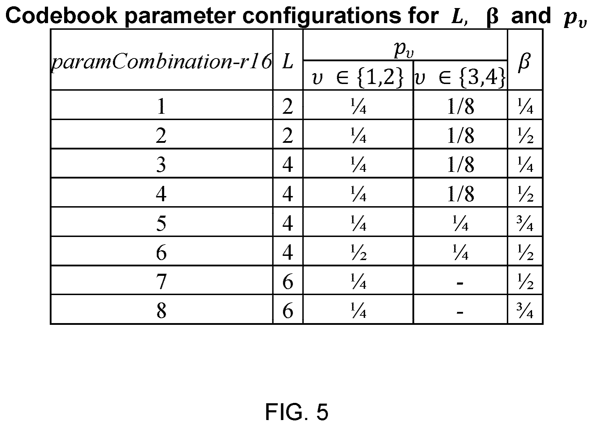

FIG. 5 shows an example of parameter combinations for type 2 codebook of Rel. 16. L denotes the number of SD basis vectors. $p_v$ denotes a parameter for calculation of the number $M_v$ of FD basis vectors for rank v being ceil ($p_v \times N_3$/R) ($M_v$ = ceil($p_v \times N_3$/R)). β denotes a parameter for calculation of the maximum number of NZCs.

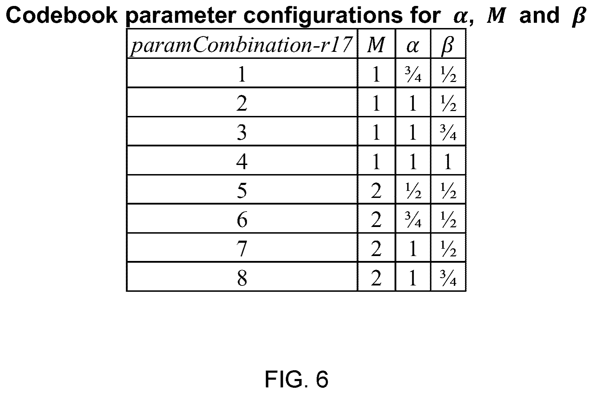

In a further enhanced type 2 PS codebook of Rel. 17, values of α, M, and β (combination of codebook parameters, parameter combination) are determined by a higher layer parameter paramCombination-r17 (codebook parameter configuration). FIG. 6 shows an example of parameter combinations for further enhanced type 2 PS codebook of Rel. 17. α denotes a parameter for calculation of the number $K_1$ of CSI-RS ports selected in the PS codebook = $\alpha P_{CSI-RS}$. M denotes the number of FD basis vectors. β denotes a parameter for calculation of the maximum number of NZCs. A precoding matrix indicated by a PMI is determined from (L + M) vectors. Here, L = $K_1$/2, and $K_1 = \alpha P_{CSI-RS}$.

In further enhanced type 2 PS CSI of Rel. 17, each CSI-RS port is beamformed by using an SD beam and an FD basis vector. Each port is associated with an SD-FD pair.

For given layer l, information based on the following equation may be reported by the UE.

$$W_l(K \times N_3) = W_1 \tilde{W}_l W_{f,l}^H \quad (H2)$$

For $W_1$(K × 2L), each matrix block is formed by L columns of a (K × K) identity matrix. The base station transmits K beamformed CSI-RS ports. Each port is associated with an SD-FD pair. The UE selects L ports from K ports, and reports, as part of PMI ($W_{1,l}$), the selected ports to the base station. Note that, in Rel. 16, each port is associated with an SD beam.

$\tilde{W}_l$(2L × $M_v$) is a matrix formed by combination coefficients (subband complex LC coefficients). UP to $K_0$ NZCs are reported. The report is formed by two parts: a bitmap for identifying an NZC location, and a quantized NZC.

In the further enhanced type 2 PS CSI of Rel. 17, $K_l^{NZ} = \Sigma_{i=0}^{k1-1} \Sigma_{f=0}^{M-1} k_{l,i,f}^{(3)} \leq K_0$ denotes the number of non-zero coefficients in layer l = 1, ..., v, and $K^{NZ} = \Sigma_{l=1}^{v} K_l^{NZ} \leq 2K_0$ denotes the number of non-zero coefficients. If v ≤ 2 and $K^{NZ} = K_1 Mv$, $i_{1,7,l}$ for layer l = 1, ..., v (bitmap indicator for the l-th layer) is not reported. In other words, when the total number of reported NZCs is equal to the maximum number of $K_1 Mv$ and also v ≤ 2, reporting of a bitmap indicating the locations of the NZCs is omitted. Note that, in Rel. 16, a bitmap for NZC locations is always reported.

$W_{f,l}$($N_3$ × $M_v$) is a matrix formed by $M_v$ ($M_v$ = 1 or 2) FD basis vector(s) per layer. Each vector includes $N_3$ FD bases (FD-DFT bases). The base station may delete $W_{f,l}$. When $M_v$ = 1, $W_{f,l}$ is OFF, and no additional FD bases are reported. When $M_v$ = 2, $W_{f,l}$ is ON, and $M_v$ additional FD basis vectors are reported. When $M_v$ = 2, window size N of FD bases $\in$ {2, 4} is configured by a higher layer parameter (valueOfN). Note that, in Rel. 16, $W_{f,l}$ is always reported.

(JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. Frequency resources may be nonoverlapping, partially overlapping (partial-overlapping), or fully overlapping (full-overlapping). When the overlap occurs, a PDSCH from one TRP interferes with a PDSCH from another TRP.

In Rel. 18, support of coherent joint transmission (CJT, mTRP CJT) using up to four TRPs is under study. Data from four TRPs may be coherently precoded and transmitted to the UE on the same time-frequency resource. For example, the same precoding matrix may be used in consideration of channels from four TRPs. "Coherent" may mean that phases of a plurality of received signals have a certain relationship with each other. Signal quality may be improved by using 4-TRP joint precoding, and there may be no interference between the four TRPs places. The data may receive only interference outside the four TRPs.

(NCJT CSI)

In Rel. 17, a scenario to which NCJT CSI reporting is applicable is single-DCI based MTRP NCJT with a type 1 single-panel codebook. For NCJT CSI measurement, two channel measurement resource (CMR) groups with CMRs each being from one TRP can be configured in single CSI-ReportConfig. One CSI report mode can be configured from two modes.

By RRC signaling, CSI-ReportConfig for Rel-17 non-coherent joint transmission (NCJT) CSI configures CMR and CSI report mode (csi-ReportMode).

Two CMR groups with ($K_s = K_1 + K_2$) CMRs are configured for a UE. $2 \leq K_s \leq 8$. $K_s$ CMRs correspond to an NZP-CSI-RS resource set for channel measurement. $K_1$ and $K_2$ are the numbers of CMRs in the two respective CMR groups. By being selected from all the possible pairs, N CMR pairs (N pairs of CMRs) (resource pairs) are configured by a higher layer. N = 1 and $K_s = 2$ are supported. Support of $N_{max} = 2$ is an optional feature of the UE. Support of $K_{S,max} = X$ is an optional feature of the UE. Each CMR can include up to 32 CSI-RS ports according to UE capability. Each CMR pair is associated with one CRI value.

By indicating one CMR from each CMR group, a bitmap by RRC signaling indicates N (N = 1, 2) CMR pair(s) to be actually used for NCJT measurement. The UE uses the CMRs in the two CMR groups to measure single-TRP CSI for TRP 1 and single-TRP CSI for TRP 2 and uses the N CMR pairs to measure NCJT CSI.

The UE selects one or more pieces of CSI to report, based on a mode (CSI report mode) configured by csi-ReportMode. csi-ReportMode indicates one of two modes (NCJT CSI modes) including modes 1 and 2 below.

- Mode 1

The UE may be configured to report X pieces of CSI associated with a single-TRP measurement hypothesis and one piece of CSI associated with an NCJT measurement hypothesis. X = 0, 1, 2. When X = 2, two pieces of CSI are associated with two different single-TRP measurement hypotheses with a plurality of CMRs from a plurality of different CMR groups. Support of X = 1, 2 is an optional UE feature for the UE supporting Option 1.

- Mode 2

The UE is configured to report one piece of CSI associated with the best hypothesis of NCJT and single-TRP measurement hypotheses.

In mode 1, the UE reports (X + 1) pieces of CSI in total including X (X = 0, 1, 2) pieces of single-TRP CSI and one piece of NCJT CSI. In mode 2, the UE reports one best piece of CSI (single CSI) from all pieces of single-TRP CSI and one piece of NCJT CSI.

In one CSI report, up to two pieces of single-TRP CSI and one piece of NCJT CSI may be reported (mode 1 with X = 2). The NCJT CSI includes one CRI, two RIs (with one joint RI index), two PMIs, two LIs, and one CQI (four layers or less). Each single-TRP CSI is the same as existing CSI and includes one CRI, one RI/PMI/LI, and one or two CQIs (eight layers or less, one CQI per CW).

For some cases below, new mapping orders (tables) for multiple fields in one CSI report are defined.

- Mapping order of wideband CSI for mode 1 with X = 0. Wideband CSI is supported only for mode 1 with X = 0, i.e., NCJT CSI.
- Mapping order of CSI part 1 for modes 1 and 2.
- Mapping order of CSI part 2 wideband for modes 1 and 2.
- Mapping order of CSI part 2 subband for modes 1 and 2.

(CJT CSI)

In an ideal case (where the four TRPs are collocated (assumed to be located at the same position)), joint estimation of aggregated channel matrix H can be performed and joint precoding matrix V can be fed back. However, there is a case where large-scale path losses of four paths are significantly different from each other. Joint precoding matrix V based on a constant module codebook is not exact. In this case, feedback per TRP and an inter-TRP coefficient can be consistent with each other by a type 2 codebook of existing NR.

For CJT with up to four TRPs in FR1, selection of four TRPs may be semi-static. Thus, the selection and configuration of four CMRs (four CSI-RS resources) for channel measurement may also be semi-static. Dynamic indication of four TRPs from a list of CSI-RS resources is also available, but is unlikely.

Path losses from the four respective TRPs to the UE are different from each other. Thus, it is difficult to perform the dynamic indication only by reporting one piece of aggregated CSI indicating a joint channel matrix.

In consideration of operation for fallback to NCJT (i.e., a single TRP), CSI per TRP (i.e., single-TRP CSI such as NCJT CSI of Rel. 17) is also conceivable.

Based on the assumption of ideal backhaul, synchronization, and the same number of antenna ports over multiple TRPs, CSI acquisition for coherent joint transmission (CJT) for FR1 and up to four TRPs is under study. For CJT multi-TRP for FDD, improvement of a type 2 codebook of Rel. 16/17 is under study.

$W_1$ (SD bases)/$W_f$ (FD bases) for respective TRPs may be the same or different from each other. $W_1$ (NZCs) for the respective TRPs may be different from each other. $W_1/W_f/W_l$ for the respective TRPs may be selected jointly or individually. It is preferable that different scenarios with different options are present for designs of $W_1/W_f/W_l$. $W_\varphi$ may be reported as an individual content, or may be reported in $W_l$. These used policies relate to an arrangement scenario (for example, intra-site multi-TRP or inter-site multi-TRP).

For example, a precoding matrix for 4-TRP CJT CSI (codebook) may be indicated by $W_1/W_f/W_l$ for the respective TRPs. $W_1$ for the respective TRPs may be the same or different from each other, and may be selected jointly or individually. $W_l$ for the respective TRPs may be different from each other, and may be selected jointly or individually. $W_f$ for the respective TRPs may be the same or different from each other, and may be selected jointly or individually.

In (Rel-18) type 2 codebook (codebook structure) for CJT multi-TRP (mTRP), at least one of some modes (codebook modes, CJT CSI modes) below may be supported.

- Mode 1 corresponds to SD/FD basis selection per TRP/TRP group This allows independent FD basis selection across N TRPs/TRP groups. For example, the codebook structure is given by the following expression. Here, N is the number of TRPs or TRP groups.

$$\begin{bmatrix} W_{1,1} \widetilde{W}_{2,1} W_{f,1}^H \\ \vdots \\ W_{1,N} \widetilde{W}_{2,N} W_{f,N}^H \end{bmatrix} \qquad (\text{I1})$$

- Mode 2 corresponds to SD basis selection per TRP/TRP group (port group or resource) and joint/common FD basis selection (over N TRPs/TRP groups). For example, the codebook structure is given by the following expression. Here, N is the number of TRPs or TRP groups.

$$\begin{bmatrix} W_{1,1} \widetilde{W}_{2,1} W_f^H \\ \vdots \\ W_{1,N} \widetilde{W}_{2,N} W_f^H \end{bmatrix} \qquad (\text{I2})$$

In these two modes, detailed design such as parameter combination, basis selection, TRP (group) selection, reference amplitude, and a $W_2$ quantization scheme may be used in common.

(Analysis)

A parameter combination framework for multi-TRP CJT CSI may be different from parameter combination frameworks for enhanced type 2 CSI of Rel. 16 and further enhanced type 2 PS CSI of Rel. 17. In such a parameter combination framework for multi-TRP CJT CSI, some parameters may be TRP-specific while some parameters may be TRP-common.

(Study #1)

In improvement of a type 2 codebook for CJT mTRP, a set (list, candidates) of $N_L$ combinations of multiple values related to SD basis selection (SD basis vector selection, the number of SD basis vectors, the number L of beams) (SD basis vector selection combinations, SD basis selection combinations) may be configured for a configuration value of $N_{TRP}$ by a base station via higher layer (RRC) signaling. Each combination may be a combination of $N_{TRP}$ $L_i$ values $\{L_1, ..., L_{N\_TRP}\}$. Here, i = 1, ..., $N_{TRP}$, and $L_i$ may correspond to TRP #i.

- When $N_L > 1$, a combination of multiple values $\{L_1, ..., L_{N\_TRP}\}$ selected from the $N_L$ configured combinations may be reported in CSI part 1 by using an indicator. $N_L = 1$ may be one of $N_L$ multiple candidate values supported by a UE.
- With existing design, SD basis selection for the n-th (n = 1, ..., N) selected CSI-RS resource may be indicated in CSI part 2 by using a combination indicator selected from a set of $C(P_{CSI-RS}/2, L_n)$ codepoints. Here, in improvement based on Rel. 16, $P_{CSI-RS}$ may be given by $2 * N_1 N_2$ ($P_{CSI-RS} = 2 * N_1 N_2$).
- Multiple candidate values supported for each of $L_n$ parameters may include existing multiple candidate values, in other words, L candidate values {2, 4, 6} in improvement based on Rel. 16. In improvement based on Rel. 17, a base station may configure a set of $N_L$ combinations for $\{\alpha_1, ..., \alpha_{N\_TRP}\}$, $L_n = \alpha_n P_{CSI-RS}/2$, and $\alpha_n = \{1/2, 3/4, 1\}$.
  In further enhanced type 2 PS CSI of Rel. 17, L is not directly configured, but $\alpha$ is configured instead, and L is calculated based on $\alpha$.
- According to existing design, in all selected N CSI-RS resources, an SD basis oversampling group for each CSI-RS resource may be indicated in CSI part 2 by using an indicator selected from a set of $O_1 O_2$ codepoints.

An SD basis configuration for CJT mTRP CSI may be $\{L_1, ..., L_{N\_TRP}\}$, based on enhanced type 2 CSI of Rel. 16. A set of a plurality of $L_i$ combinations for all the TRPis may be configured by the base station. For example, for four TRPs, a set of a plurality of combinations for all the TRPs {6, 4, 2, 2}, {4, 4, 4, 2}, {6, 6, 2, 4}, and {4, 2, 2, 4} may be configured, for example. A UE may select/report one combination by using an indicator. Use of an N-bit bitmap for indicating TRP selection is under study.
An SD basis configuration for CJT mTRP CSI may be $\{\alpha_1, ..., \alpha_{N\_TRP}\}$, based on further enhanced type 2 PS CSI of Rel. 17.
It is studied that, in a type 2 codebook for CJT mTRP, the number $M_v$ of FD basis vectors is common across all the N CSI-RS resources in mode 1 (CJT CSI mode 1). $M_v$ relates to $p_v$ in Rel. 16 and relates to M in Rel. 17.
In mode 2 (CJT CSI mode 2), the number of FD basis vectors may be different for each of multiple TRPs.

(Study #2)

For improvement of a type 2 codebook for CJT mTRP, it is studied that selection of N CSI-RS resources is performed by a UE to be reported as part of a CSI report. Here, $N \in \{1, ..., N_{TRP}\}$.

- N denotes the number of CSI-RS resources (TRPs) to cooperate. $N_{TRP}$ denotes the maximum number of CSI-RS resources (TRPs) to cooperate and is configured by a base station via higher layer signaling.
- An $N_{TRP}$-bit bitmap may be reported in CSI part 1 (UCI) for the UE to indicate TRPs selected by the UE for CSI reporting. Selection of N CSI-RS resources from $N_{TRP}$ CSI-RS resources may be reported via the $N_{TRP}$-bit bitmap in CSI part 1. For example, when N = 4 TRPs are configured and the UE selects the first and third TRPs, the UE may report a bitmap [1010] indicating the selection.
- Configuration of restriction of $N = N_{TRP}$ may be supported, and the restriction may be configured by a base station via higher layer signaling. For example, when $N = N_{TRP} = 4$ TRPs are configured, the UE may report CJT CSI assuming 4-TRP CJT. When the restriction is configured, no $N_{TRP}$-bit bitmap may be reported.
- This feature may be a UE optional feature.

Candidate values for $N_{TRP}$ may be 1, 2, 3, and 4. Only one transmission hypothesis may be reported, and the UE need not be required to calculate CSI for a plurality of transmission hypotheses.
The base station may configure one or more CMRs for $N_{TRP}$ = 1, 2, 3, 4 for CJT mTRP. The number of TRPs selected by the UE may be $N \in \{1, ..., N_{TRP}\}$. This may mean that only one TRP (single-TRP CSI) being selected for reporting is possible.

(Study #3)

In improvement of a type 2 codebook for CJT mTRP, according to existing specifications (enhanced type 2 PS of Rel. 16 and further enhanced type 2 PS of Rel. 17), it is studied to support an individual bitmap for each CSI-RS resource related to locations of non-zero coefficients (NZCs) indicated by a bitmap for each layer.

The entire size of the bitmap is $\Sigma_{n=1}^{N}B_n$. Here, $B_n$ denotes the size of a bitmap for CSI-RS resource n.

For a bitmap indicating locations of NZCs, use of existing design is studied. This indicates that the size ($B_n$) of a bitmap for selected CSI-RS resource n is $2L_nM_v$ ($B_n = 2L_nM_v$).

It is studied that restriction $K_0$ related to the maximum number of NZCs per layer is jointly defined for all the N CSI-RS resources (all the N TRPs).

It is studied to support restriction related to the total number of NZCs for all the layers. According to the existing specifications, the maximum number of the total number is $2K_0$.

For a bitmaps for indicating locations of NZCs, a bitmap per TRP is supported. The maximum number $K_0$ of NZCs per layer is defined for all the TRPs.

(Issue #1)

In enhancement based on enhanced type 2 CSI of Rel. 16, L corresponds to a TRP-specific configuration $\{L_1, ..., L_{N\_TRP}\}$. In mode 1 (CJT CSI mode 1), $p_v$ and $\beta$ are common to multiple TRPs. Hence, it is conceivable that $\{L_1, ..., L_{N\_TRP}\}$ and $\{p_v, \beta\}$ based on a parameter combination configuration of enhanced type 2 CSI are defined individually. However, in these tables, when any combination of A combinations of $\{L_1, ..., L_{N\_TRP}\}$ and B combinations of $\{p_v, \beta\}$ can be configured by an NW, the number of possible combinations (A × B) may be large, which causes report overhead for a specific combination to be large, and some combinations may be not needed. As described above, the relationship between $\{L_1, ..., L_{N\_TRP}\}$ and $\{p_v, \beta\}$ is not clear. Unless such a relationship is clear, throughput reduction/communication quality degradation and the like may be caused.

(Issue #2)

In enhancement based on further enhanced type 2 PS CSI of Rel. 17, $\alpha$ corresponds to a TRP-specific configuration $\{\alpha_1, ..., \alpha_{N\_TRP}\}$. It is conceivable that separate tables are defined for $\{\alpha_1, ..., \alpha_{N\_TRP}\}$ and $\{M, \beta\}$ based on a parameter combination configuration of further enhanced type 2 PS CSI. However, in these tables, when any combination of $\{\alpha_1, ..., \alpha_{N\_TRP}\}$ and $\{M, \beta\}$ can be configured by an NW, the number of possible combinations (M × N) may be large, which causes report overhead for a specific combination to be large, and some combinations may be not needed. As described above, the relationship between $\{\alpha_1, ..., \alpha_{N\_TRP}\}$ and $\{M, \beta\}$ is not clear. Unless such a relationship is clear, throughput reduction/communication quality degradation and the like may be caused.

(Issue #3)

In enhancement based on enhanced type 2 CSI of Rel. 16, L corresponds to a TRP-specific configuration $\{L_1, ..., L_{N\_TRP}\}$. In mode 2 (CJT CSI mode 2), $p_v$ may be different for each of multiple TRPs. If $p_v$ is common to the multiple TRPs, a configuration method may be the same as the configuration method in mode 1. A configuration framework of $p_v$ per TRP is not clear. Unless such a configuration method is clear, throughput reduction/communication quality degradation and the like may be caused.

In view of this, the inventors of the present invention came up with the idea of a method of configuring a parameter for CJT CSI.

Embodiments according to the present disclosure will be described in detail with reference to the drawings as follows. Note that respective embodiments (for example, respective cases) below may each be employed individually, or at least two of the respective embodiments may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, any other message (for example, a message from a core network such as a positioning protocol (for example, NR Positioning Protocol A (NRPPa)/LTE Positioning Protocol (LPP) message)), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, $a_b{}^c$ and $a\_b^{\wedge}c$ may be interchangeably interpreted. In the present disclosure, $a_b$ and $a\_b$ may be interchangeably interpreted. In the present disclosure, $a^c$ and $a^{\wedge}c$ may be interchangeably interpreted. In the present disclosure, ceil(x), a ceiling function, and ceiling may be interchangeably interpreted. In the present disclosure, floor(x), a floor function, and floor may be interchangeably interpreted.

In the present disclosure, a basis(base), a DFT basis, a basis vector, and a DFT basis vector may be interchangeably interpreted. In the present disclosure, an SD basis, an SD-DFT basis, a beam, an SD beam, an SD 2D-DFT vector, an SD basis vector, a beam index, and i may be interchangeably interpreted. In the present disclosure, L, $L_n$, the number of SD beams, the number of beams, and the number of SD 2D-DFT vectors may be interchangeably interpreted. In the present disclosure, an FD basis, an FD-DFT basis, an FD beam, an FD basis vector, an FD-DFT basis vector, an FD basis vector index, and f may be interchangeably interpreted.

In the present disclosure, a size, a length, and a number may be interchangeably interpreted.

In the present disclosure, CSI, a codebook, and a PMI may be interchangeably interpreted.

In the present disclosure, a TRP and a CSI-RS resource may be interchangeably interpreted.

(Radio Communication Method)

In each embodiment, CJT CSI and enhancement of CSI based on at least one of enhanced type 2 CSI (Rel. 16) and further enhanced type 2 PS CSI (Rel. 17) may be interchangeably interpreted.

In each embodiment, an index, a parameter combination, a parameter combination index, a parameter combination configuration (paramCombination), a codebook parameter configuration, a linkage, a linkage combination, a linkage index, and a linkage configuration may be interchangeably interpreted.

In each embodiment, a parameter, a codebook parameter, L, $L_n$, $p_v$, $p_{v,n}$, $\beta$, $\alpha$, $\alpha_n$, and M may be interchangeably interpreted.

In each embodiment, a table, a plurality of combination candidates, and a plurality of linkage candidates may be interchangeably interpreted. In each embodiment, a separate table and a separate parameter combination may be interchangeably interpreted. In each embodiment, a joint table and a joint parameter combination may be interchangeably interpreted. In each embodiment, a linkage table and a parameter combination linkage may be interchangeably interpreted.

In each embodiment, a mode, a codebook mode, and a CJT CSI mode may be interchangeably interpreted.

In each embodiment, a first parameter, L, and $L_n$ may be interchangeably interpreted. In each embodiment, a second parameter, $p_v$, and $p_{v,n}$ may be interchangeably interpreted. In each embodiment, a third parameter, $\alpha$, and $\alpha_n$ may be interchangeably interpreted. In each embodiment, a fourth parameter and $\beta$ may be interchangeably interpreted. In each embodiment, a fifth parameter and M may be interchangeably interpreted.

<Embodiment #0>

This embodiment relates to issue #1 and relates to combinations of $\{L_1, ..., L_{N\_TRP}\}$ in enhancement based on enhanced type 2 CSI of Rel. 16.

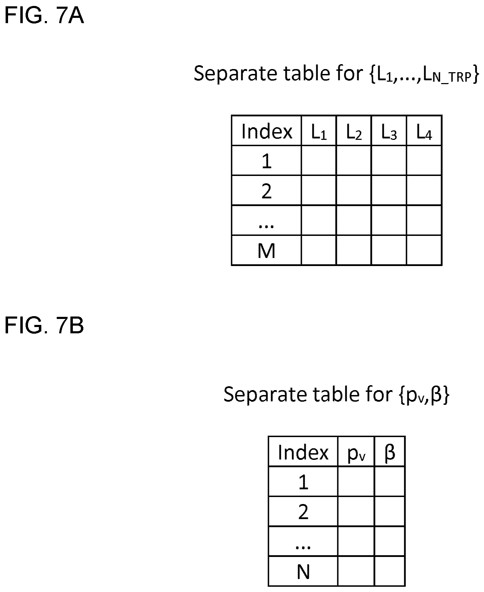

As in the examples in FIG. 7A and FIG. 7B, a plurality of combinations of $\{L_1, ..., L_{N\_TRP}\}$ and a plurality of combinations of $\{p_v, \beta\}$ may be defined by separate tables.

In a table for $\{L_1, ..., L_{N\_TRP}\}$ (plurality of combination candidates for $L_n$), $L_n$ ($N \in \{1, ..., N_{TRP}\}$) candidate values may be $\{2, 4\}$ or $\{2, 4, 6\}$. The $L_n$ candidate values may be defined in a specification or may be configurable depending on UE capability report.

A UE may report capability related to supported values of $L_n$. The supported values may be $\{2, 4\}$ or $\{2, 4, 6\}$, for example. The UE may report capability related to supported values of combinations of $\{L_1, ..., L_{N\_TRP}\}$. The UE may report capability related to the maximum allowed sum value (supported value) of $L_n$. The sum of $L_n$ may be $\Sigma_{n=1}^{N\_TRP} L_n$.

- Example 0-1

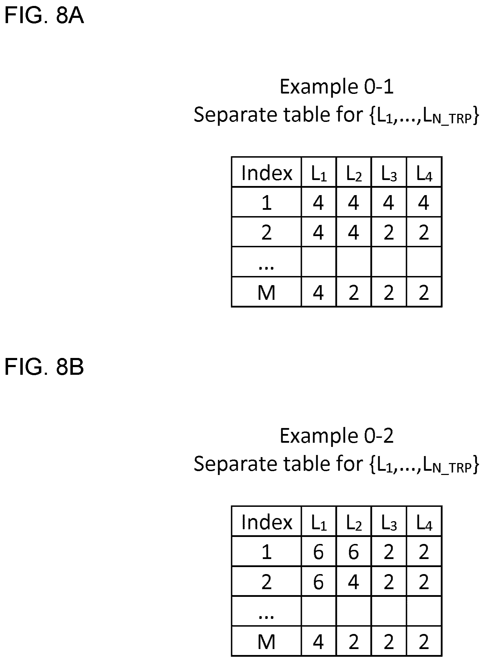

FIG. 8A shows example 0-1 of a plurality of combination candidates (separate table) for $L_n$. In this example, $N_{TRP}$ = 4, and candidate values of $L_n$ are $\{2, 4\}$.

- Example 0-2

FIG. 8B shows example 0-2 of a plurality of combination candidates (separate table) for $L_n$. In this example, $N_{TRP}$ = 4, and candidate values of $L_n$ are {2, 4, 6}.

In these examples, one combination of $L_n$ is associated with one index value. By configuring one value of the index, one combination of $L_n$ may be configured.

According to this embodiment, a UE can be appropriately configured with a combination of $L_n$.

<Embodiment #1>

This embodiment relates to issue #1 and relates to combinations of $\{L_1, ..., L_{N\_TRP}\}$ and $\{p_v, \beta\}$ in enhancement based on enhanced type 2 CSI of Rel. 16.

A plurality of combination candidates (joint table) of $\{L_1, ..., L_{N\_TRP}, p_v, \beta\}$ may be defined. Supported values of linkage (link) combinations between $\{L_1, ..., L_{N\_TRP}\}$ and $\{p_v, \beta\}$ may be defined in a specification. P combinations of (M × N) combinations may be included in the table without some combinations of the (M × N) combinations being included in the table.

- Example 1-1

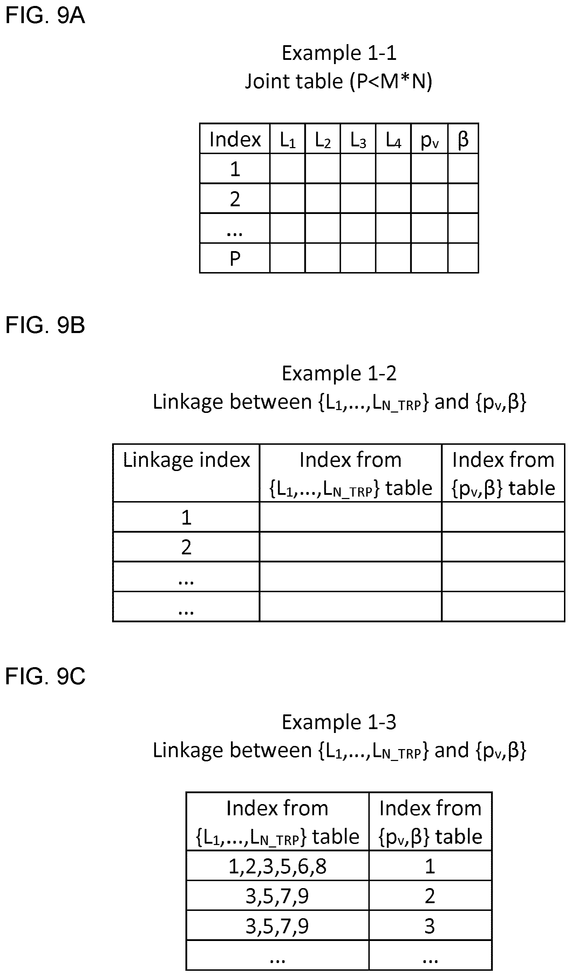

FIG. 9A shows an example of a plurality of combination candidates (joint table) of $\{L_1, ..., L_{N\_TRP}, p_v, \beta\}$. In this example, $N_{TRP}$ = 4, and the number of values of an index is P. In this example, one combination of $\{L_1, ..., L_{N\_TRP}, p_v, \beta\}$ is associated with one index value.

{Variation 1 of Embodiment #1}

Separate tables for $\{L_1, ..., L_{N\_TRP}\}$ and $\{p_v, \beta\}$ may be defined. Possible linkages between $\{L_1, ..., L_{N\_TRP}\}$ and $\{p_v, \beta\}$ may be defined in another table (linkage table). For each different UE capability, a different linkage table may be defined in a specification or may be configured. For example, candidate values of $L_n$ may be {2, 4} or {2, 4, 6} depending on UE capability.

- Example 1-2

FIG. 9B shows an example of a plurality of linkage candidates (linkage table) between combination indices of $\{L_1, ..., L_{N\_TRP}\}$ and combination indices of $\{p_v, \beta\}$. In this example, an index of $\{L_1, ..., L_{N\_TRP}\}$ and an index of $\{p_v, \beta\}$ are associated with one index of the linkage. Further, at least one of the separate table for $\{L_1, ..., L_{N\_TRP}\}$ and the separate table for $\{p_v, \beta\}$ in embodiment #0 may be defined.

When a plurality of linkage tables are defined for a plurality of different UE capabilities, each linkage table may include the indices in the table in example 0-1 described above and the indices corresponding to candidate values {2, 4} in the table in example 0-2 described above, for example.

When a plurality of linkage tables are defined for a plurality of different UE capabilities, each linkage table may include the indices in the table in example 0-2 described above, for example.

{Variation 2 of Embodiment #1}

When a combination of $L_n$ is configured by an NW, the NW can configure a plurality of configurations of the combination of $\{L_1, ..., L_{N\_TRP}\}$ and one configuration of the combination of $\{p_v, \beta\}$. For example, the NW can configure up to X configurations of the combination of $\{L_1, ..., L_{N\_TRP}\}$. X may be defined in a specification or may be depend on UE capability report. This operation is because the number of SD basis vectors for multi-TRP can be selected/reported by a UE in study #1 described above.

For the index/row of each combination of $\{p_v, \beta\}$, the combination indices allowed for $\{L_1, ..., L_{N\_TRP}\}$ may be defined.

- For the combination index of $\{p_v, \beta\}$ = 1, the combination indices allowed for $\{L_1, ..., L_{N\_TRP}\}$ may be 1, 2, 3, 5, 6, and 8.
- For the combination index of $\{p_v, \beta\}$ = 2, the combination indices allowed for $\{L_1, ..., L_{N\_TRP}\}$ may be 3, 5, 7, and 9.
- When a linkage table is defined, multiple values of the combination indices of $\{L_1, ..., L_{N\_TRP}\}$ may be present for each value of the combination indices of $\{p_v, \beta\}$ for each index/row of the linkage table.

FIG. 9C shows an example of a plurality of linkage candidates (linkage table) between combination indices of

$\{L_1, ..., L_{N\_TRP}\}$ and combination indices of $\{p_v, \beta\}$. In this example, a plurality of indices of $\{L_1, ..., L_{N\_TRP}\}$ and one index of $\{p_v, \beta\}$ are associated with one linkage index. An NW may configure the plurality of combinations of $\{L_1, ..., L_{N\_TRP}\}$ and one combination of $\{p_v, \beta\}$ and select/configure/indicate one of the plurality of combinations of the one configured $\{L1, ..., L_{N\_TRP}\}$. At least one of the separate table for $\{L_1, ..., L_{N\_TRP}\}$ and the separate table for $\{p_v, \beta\}$ in embodiment #0 may be defined.

According to this embodiment, a UE can be appropriately configured with a combination of $L_n$, $p_v$, and $\beta$.

<Embodiment #2>

This embodiment relates to issue #1 and relates to restriction on at least one of $\{L_1, ..., L_{N\_TRP}\}$ and $\{p_v, \beta\}$ in enhancement based on enhanced type 2 CSI of Rel. 16.

Restriction on the number of CSI-RS ports to be applied may be added to values indicated by at least one table in embodiment #0/#1. The restriction may be $P_{CSI-RS} = \{4, 8, 12, 16, 24, 32\}$, for example.

- At least one of a specific range of indices in a table for $\{L_1, ..., L_{N\_TRP}\}$, a specific range of indices in a table for $\{p_v, \beta\}$, and a specific range of indices in a linkage table may be applied to a specific range of values of $P_{CSI-RS}$. For example, only combination indices of $\{L_1, ..., L_{N\_TRP}\} = 1$ to 4 may be applied to $P_{CSI-RS} \leq 16$.
- The specific range of indices in each table need not be applied to the specific range of values of $P_{CSI-RS}$. For example, combination indices of $\{L_1, ..., L_{N\_TRP}\} = 1$ to 4 need not be applied to $P_{CSI-RS} \geq 24$.
- Specific candidates for $L_n$, $p_v$, and $\beta$ may be applied to the specific range of values of $P_{CSI-RS}$ or need not be applied to the specific range of values of $P_{CSI-RS}$. For example, $L_n = 6$ need not be applied to $P_{CSI-RS} = 32$.

Some indices each indicating a large value and resulting in high report overhead may be applied only to smaller values of $P_{CSI-RS}$ or need not be applied to larger values of $P_{CSI-RS}$.

According to this embodiment, a UE can apply at least one appropriate value of $\{L_1, ..., L_{N\_TRP}\}$ and $\{p_v, \beta\}$ to the number of selected CSI-RS ports, based on restriction.

<Embodiment #3>

This embodiment relates to issue #1 and relates to restriction on the sum value of $\{L_1, ..., L_{N\_TRP}\}$ in enhancement based on enhanced type 2 CSI of Rel. 16.

The restriction on the sum value of $L_n$ applied to the values of $\{p_v, \beta\}$ ($\Sigma_{n=1}^{N\_TRP} L_n$) may be added.

- For each value of $\{p_v, \beta\}$, the maximum allowed sum value of $L_n$ may be defined.

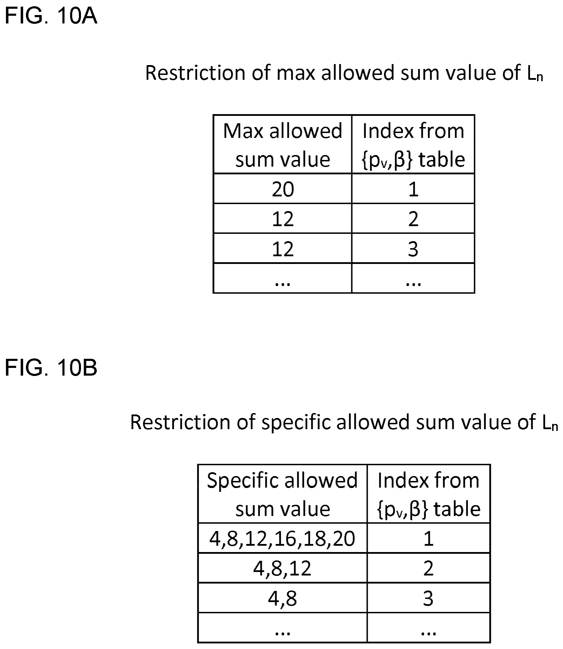

   -- FIG. 10A shows an example of a plurality of linkage candidates (linkage table) between a maximum sum value $L_{max}$ of $L_n$ and combination indices of $\{p_v, \beta\}$. In this example, one maximum allowed sum value $L_{max}$ of $L_n$ is associated with one combination index of $\{p_v, \beta\}$.
   -- For index 2-3 in the table for $\{p_v, \beta\}$, the maximum allowed sum value of $L_n$ may be 12. With this restriction, when the sum value of $L_n$ indicated by an index in the table for $\{L_1, ..., L_{N\_TRP}\}$ is 12 or smaller, index 2-3 in the table for $\{p_v, \beta\}$ can be configured. Otherwise, index 2-3 in the table for $\{p_v, \beta\}$ need not be configured (UE need not assume that index 2-3 in the table for $\{p_v, \beta\}$ is configured), or index 1 in the table for $\{p_v, \beta\}$ corresponding to a case where the sum value of $L_n$ is larger than 12 may be configured.

- For each value of $\{p_v, \beta\}$, a specific allowed sum value of $L_n$ may be defined.

   -- FIG. 10B shows an example of a plurality of linkage candidates (linkage table) between a specific sum value $\Sigma_{n=1}^{N\_TRP} L_n$ of $L_n$ and combination indices of $\{p_v, \beta\}$. In this example, one specific sum value $\Sigma_{n=1}^{N\_TRP} L_n$ of $L_n$ is associated with one combination index of $\{p_v, \beta\}$.
   -- For index 1-2 in the table for $\{p_v, \beta\}$, the specific allowed sum value of $L_n$ may include 12. With this restriction, when the sum value of $L_n$ indicated by an index in the table for $\{L_1, ..., L_{N\_TRP}\}$ is 12, index 1-2 in the table for $\{p_v, \beta\}$ can be configured. Otherwise, index 1-2 in the table for $\{p_v, \beta\}$ need not be configured (UE need not assume that index 1-2 in the table for $\{p_v, \beta\}$ is configured), or an index in the table for $\{p_v, \beta\}$ corresponding to the sum value of $L_n$ may be configured.

In this embodiment, at least one of the separate table for $\{L_1, ..., L_{N\_TRP}\}$ and the separate table for $\{p_v, \beta\}$ in embodiment #0 may be defined.

Such restriction may be defined in a specification, may be implemented by a joint table or a linkage table for $\{L_{max}\}$

and $\{p_v, \beta\}$, or may be implemented by a joint table or a linkage table for $\{\Sigma_{n=1}^{N\_TRP} L_n\}$ and $\{p_v, \beta\}$.

According to this embodiment, a UE can appropriately determine $L_n$, $p_v$, and $\beta$, based on restriction.

<Embodiment #4>

This embodiment relates to issue #1 and relates to other restrictions in enhancement based on enhanced type 2 CSI of Rel. 16.

For indices in at least one table in embodiments #0 to #3, at least one of some restrictions below may be considered.

- Maximum value or specific value of a rank (per TRP or across multiple TRPs)
- Maximum value or specific value of the number of TRPs to be configured
- Maximum value or specific value of R
- Maximum value or specific value of the number of FD basis vectors

For each restriction in each embodiment, UE capability related to the maximum (supported/allowed) value of the restriction may be introduced/reported.

According to this embodiment, a UE can appropriately determine at least one of $L_n$, $p_v$, and $\beta$, based on restriction.

<Embodiment #5>

This embodiment relates to issue #2 and relates to enhancement based on further enhanced type 2 PS CSI of Rel. 17.

By interpreting $\{L_1, ..., L_{N\_TRP}\}$ as $\{\alpha_1, ..., \alpha_{N\_TRP}\}$ and interpreting $\{p_v, \beta\}$ as $\{M, \beta\}$, at least one of embodiments #0 to #4 may be applied to enhancement based on further enhanced type 2 PS CSI of Rel. 17.

By interpreting the sum value of $L_n (\Sigma_{n=1}^{N\_TRP} L_n)$ as the sum value of $\alpha_n$ $(\Sigma_{n=1}^{N\_TRP} \alpha_n)$, embodiment #3 may be applied. By interpreting the sum value of $L_n (\Sigma_{n=1}^{N\_TRP} L_n)$ as the sum value of the number of CSI-RS ports to be selected $(P_{CSI\text{-}RS} \times \Sigma_{n=1}^{N\_TRP} \alpha_n)$, embodiment #3 may be applied.

By considering a further restriction factor, embodiment #4 may be applied. The restriction factor may be an RRC-configured FD basis selection window size N, for example. N may be similar to valueOfN in a configuration of further enhanced type 2 PS CSI (CodebookConfig) of Rel. 17.

According to this embodiment, a UE can be appropriately configured with at least one combination of $\alpha_n$, M, and $\beta$.

<Embodiment #6>

This embodiment relates to issue #3 and relates to enhancement based on enhanced type 2 CSI of Rel. 16.

$p_v$ may be different for each of multiple TRPs. In mode 2, $p_v$ may be different for each of multiple TRPs.

- Option 1

An individual table for $\{p_{v,1}, ..., p_{v,N\_TRP}\}$ (table, different from those for $L_n$ and $\beta$, separate table) may be defined.

Any combination configuration, a linkage table, or a linkage combination configuration may be configured by an RRC IE among $\{L_1, ..., L_{N\_TRP}\}$, $\{p_{v,1}, ..., p_{v,N\_TRP}\}$, and $\beta$. By interpreting $\{L_1, ..., L_{N\_TRP}\}$ and $\{p_v, \beta\}$ as $\{L_1, ..., L_{N\_TRP}\}$, $\{p_{v,1}, ..., p_{v,N\_TRP}\}$, and $\beta$, a table/configuration in variation 1/2 of embodiment #1 may be applied to any combination configuration, a linkage table, or a linkage combination configuration.

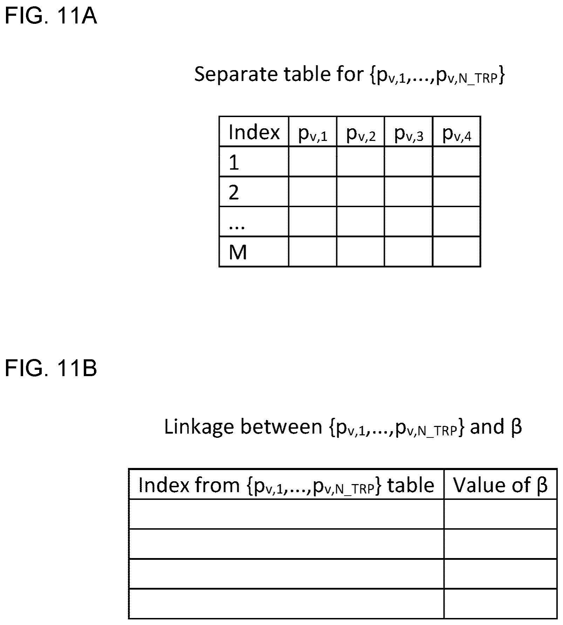

FIG. 11A shows an example of a separate table of $p_{v,n}$ according to option 1 of embodiment #6. In this example, one combination of $\{p_{v,1}, ..., p_{v,N\_TRP}\}$ is associated with one index.

FIG. 11B shows an example of a linkage table according to option 1 of embodiment #6. In this example, one index of a combination of $\{p_{v,1}, ..., p_{v,N\_TRP}\}$ is associated with one index of $\beta$.

In this option, at least one of the separate table for $\{L_1, ..., L_{N\_TRP}\}$ and a separate table for $\beta$ in embodiment #0 may be defined, or a (joints/separate) table for $\{L_1, ..., L_{N\_TRP}, \beta\}$ may be defined.

- Option 2

A plurality of joint combination candidates (joint table) for $\{p_{v,1}, ..., p_{v,N\_TRP}, \beta\}$ may be defined.

Any combination configuration, a linkage table, or a linkage combination configuration may be may be configured by an RRC IE between $\{L_1, ..., L_{N\_TRP}\}$ and $\{p_{v,1}, ..., p_{v,N\_TRP}, \beta\}$. By interpreting $\{L_1, ..., L_{N\_TRP}, p_v, \beta\}$ as $\{L_1, ..., L_{N\_TRP}, p_{v,1}, ..., p_{v,N\_TRP}, \beta\}$, a table/configuration in variation 1/2 of embodiment #1 may be applied to any combination configuration, a linkage table, or a linkage combination configuration. By interpreting $\{L_1, ..., L_{N\_TRP}\}$ and $\{p_v, \beta\}$ as $\{p_{v,1}, ..., p_{v,N\_TRP}\}$ and $\beta$, embodiment #1 may be applied to a joint table for $\{p_{v,1}, ..., p_{v,N\_TRP}, \beta\}$.

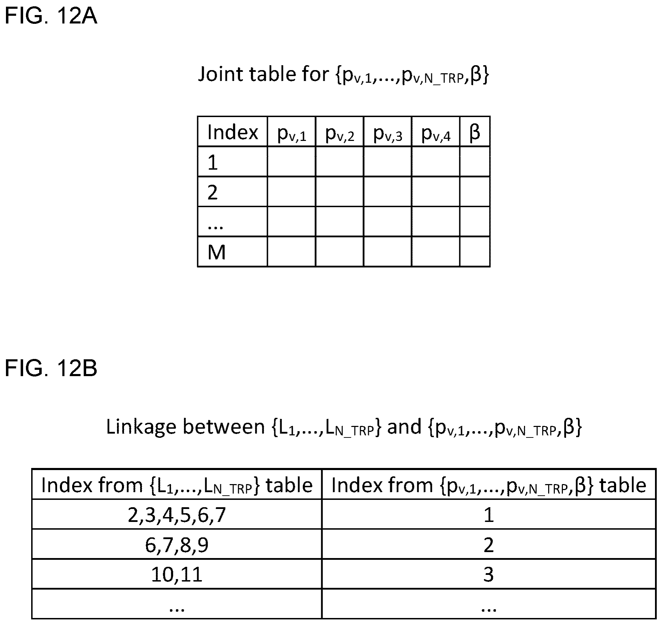

FIG. 12A shows an example of a plurality of combination candidates for $p_{v,n}$ and $\beta$. In this example, one combination of $\{p_{v,1}, ..., p_{v,N\_TRP}, \beta\}$ is associated with one index.

FIG. 12B shows an example of a plurality of linkage candidates. In this example, one index of a combination of $\{L_1, ..., L_{N\_TRP}\}$ is associated with one index of a combination of $\{p_{v,1}, ..., p_{v,N\_TRP}, \beta\}$. Embodiment #0 may be applied to a separate table for $\{L_1, ..., L_{N\_TRP}\}$.

In this option, a separate table for $\{L_1, ..., L_{N\_TRP}\}$ in embodiment #0 may be defined.

- Option 3

A plurality of joint combination candidates (joint table) for $\{L_1, ..., L_{N\_TRP}, p_{v,1}, ..., p_{v,N\_TRP}, \beta\}$ may be defined.

By interpreting $p_v$ as $\{p_{v,1}, ..., p_{v,N\_TRP}\}$, embodiment #1 may be applied to a joint table for $\{L_1, ..., L_{N\_TRP}, p_{v,1}, ..., p_{v,N\_TRP}, \beta\}$.

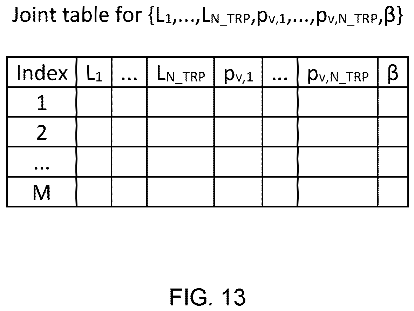

FIG. 13 shows an example of a plurality of combination candidates. In this example, one combination of $\{L_1, ..., L_{N\_TRP}, p_{v,1}, ..., p_{v,N\_TRP}, \beta\}$ is associated with one index.

According to this embodiment, a UE can be appropriately configured with a plurality of $p_v$ for multiple TRPs.

<Embodiment #7>

This embodiment relates to issue #3 and relates to restriction in enhancement based on enhanced type 2 CSI of Rel. 16.

By interpreting $p_v$ as $\{p_{v,1}, ..., p_{v,N\_TRP}\}$, at least one restriction from embodiments #2 to #4 may be applied.

According to this embodiment, a UE can appropriately determine at least one of $L_n$, $p_{v,n}$, and $\beta$, based on restriction.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- Support of specific processing/operation/control/information for at least one of embodiments above
- Support of Doppler CSI based on at least one of enhanced type 2 CSI (Rel. 16) and further enhanced type 2 PS CSI (Rel. 17)

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of the operations of the above-described embodiments, any RRC parameter for a specific release (for example, Rel. 18/19), or the like.

When not supporting at least one of the specific UE capabilities or not configured with the specific information, the UE may apply operation of Rel. 15/16, for example.

(Supplementary Notes)

Regarding one embodiment of the present disclosure, the following supplementary notes of the invention will be given.

{Supplementary Note 1}

A terminal including:

a receiving section that receives an index for channel state information (CSI) reporting of multiple transmission/reception points (TRPs) to be used for coherent joint transmission (CJT); and
a control section that determines, based on the index, multiple values of one parameter among a first parameter related to the number of beams, a second parameter to be used for calculation of the number of frequency domain discrete Fourier transform (DFT) vectors, and a third parameter to be used for calculation of the number of selected CSI-reference signal (RS) ports, the multiple values corresponding to the multiple respective TRPs.

{Supplementary Note 2}

The terminal according to supplementary note 1, wherein the index corresponds to one of a plurality of candidates for a combination including the multiple values of the first parameter, one or more values of the second parameter, and one value of a fourth parameter to be used for calculation of a maximum number of non-zero coefficients.

{Supplementary Note 3}

The terminal according to supplementary note 1 or 2, wherein the index corresponds to one of a plurality of candidates for a combination including the multiple values of the third parameter, one value of a fourth parameter to be used for calculation of a maximum number of non-zero coefficients, and one value of a fifth parameter indicating the number of frequency domain DFT vectors.

{Supplementary Note 4}

The terminal according to any one of supplementary notes 1 to 3, wherein the control section determines, based on a linkage between the multiple values and one or more parameters, at least one of the multiple values and the one or more parameters.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

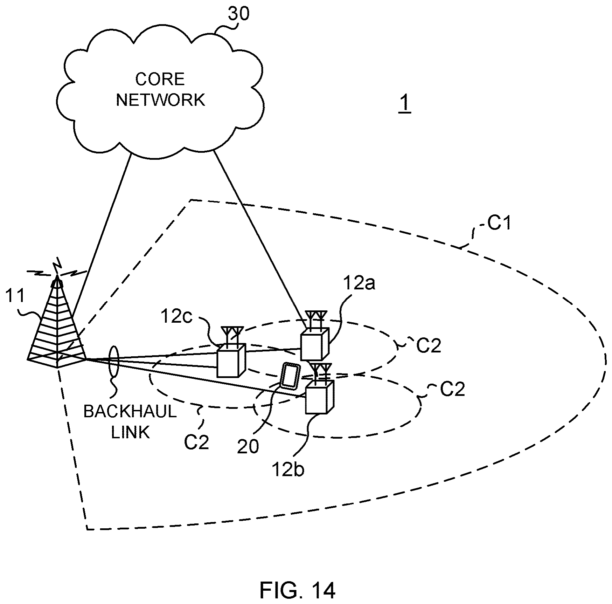

FIG. 14 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR), and so on, whose specifications have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information, and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

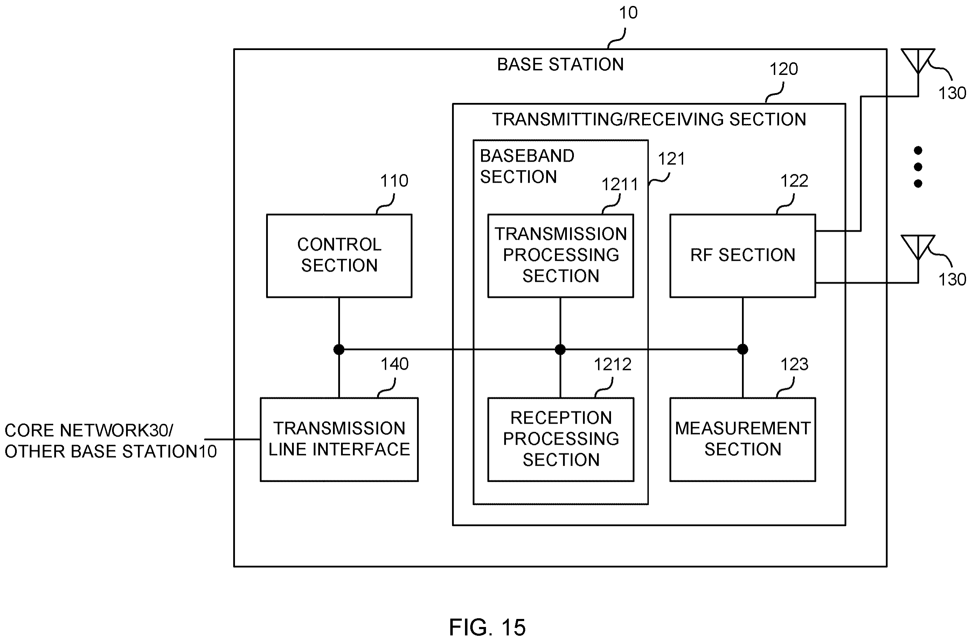

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides NFs) included in the core network 30, other base stations 10, and so on, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a configuration of a channel state information (CSI) report including one or more parameters indicating at least one of rank indicator restriction and codebook subset restriction. The one or more parameters may be applied to coherent joint transmission CSI, and the control section 110 may control reception of a report of the CSI.

Note that the control section 110 may determine, for channel state information (CSI) reporting of multiple transmission/reception points (TRPs) to be used for coherent joint transmission (CJT), multiple values of one parameter among a first parameter related to the number of beams, a second parameter to be used for calculation of the number of frequency domain discrete Fourier transform (DFT) vectors, and a third parameter to be used for calculation of the number of selected CSI-reference signal (RS) ports, the multiple values corresponding to the multiple respective TRPs. The transmitting/receiving section 120 may transmit an index corresponding to the multiple values.

(User Terminal)

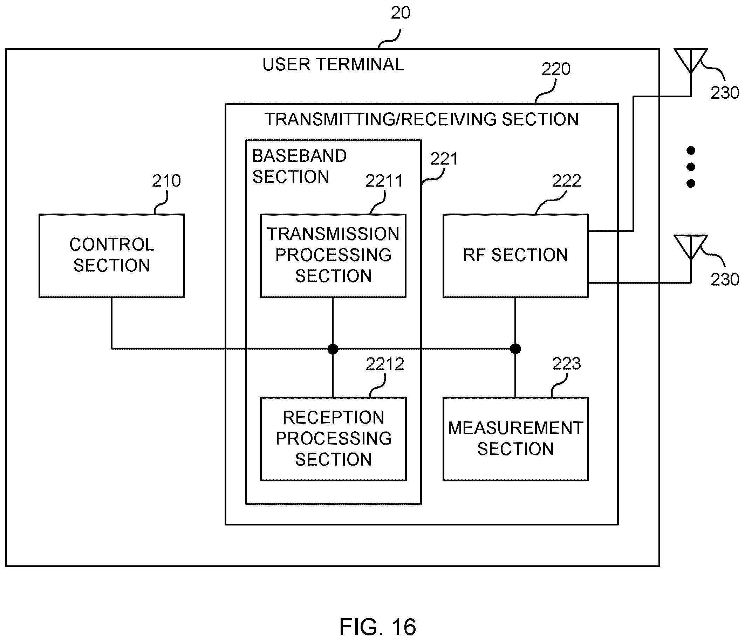

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure received power (for example, RSRP), received quality (for example, RSRQ, SINR, SNR), signal strength (for example, RSSI), channel information (for example, CSI), or the like. The measurement results may be output to the control section 210.

Note that the measurement section 223 may derive channel measurement for CSI calculation, based on a resource for channel measurement. The resource for channel measurement may be a non-zero power (non zero power (NZP)) CSI-RS resource, for example. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and CSI-IM and zero power (ZP) CSI-RS may be interchangeably interpreted. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive an index for channel state information (CSI) reporting of multiple transmission/reception points (TRPs) to be used for coherent joint transmission (CJT). The control section 210 may determine, based on the index, multiple values of one parameter among a first parameter related to the number of beams, a second parameter to be used for calculation of the number of frequency domain discrete Fourier transform (DFT) vectors, and a third parameter to be used for calculation of the number of selected CSI-reference signal (RS) ports, the multiple values corresponding to the multiple respective TRPs.

The index may correspond to one of a plurality of candidates for a combination including the multiple values of the first parameter, one or more values of the second parameter, and one value of a fourth parameter to be used for calculation of a maximum number of non-zero coefficients.

The index may correspond to one of a plurality of candidates for a combination including the multiple values of the third parameter, one value of a fourth parameter to be used for calculation of a maximum number of non-zero coefficients, and one value of a fifth parameter indicating the number of frequency domain DFT vectors.

The control section may determine, based on a linkage between the multiple values and one or more parameters, at least one of the multiple values and the one or more parameters.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

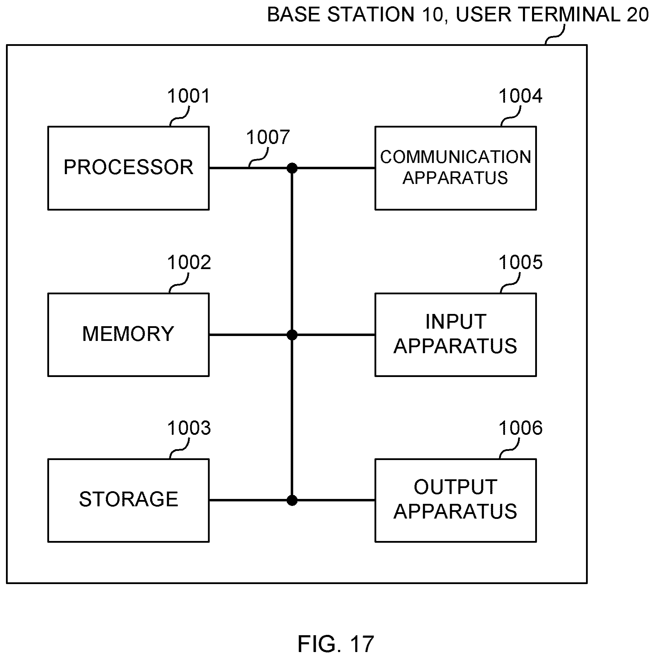

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

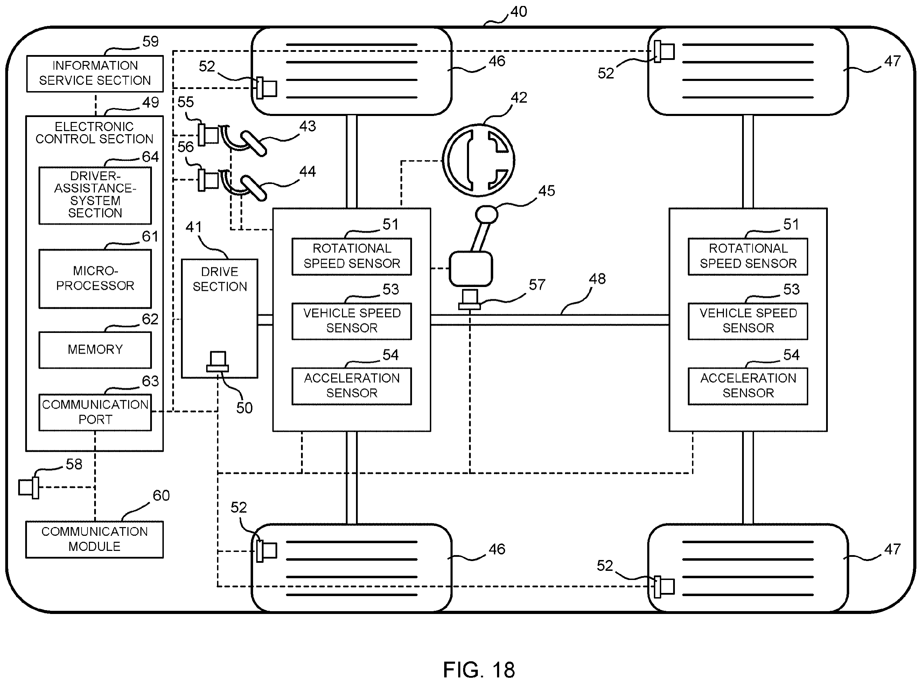

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1. A terminal comprising:

   a receiving section that receives an index for channel state information (CSI) reporting of multiple transmission/reception points (TRPs) to be used for coherent joint transmission (CJT); and
   a control section that determines, based on the index, multiple values of one parameter among a first parameter related to the number of beams, a second parameter to be used for calculation of the number of frequency domain discrete Fourier transform (DFT) vectors, and a third parameter to be used for calculation of the number of selected CSI-reference signal (RS) ports, the multiple values corresponding to the multiple respective TRPs.

2. The terminal according to claim 1, wherein
   the index corresponds to one of a plurality of candidates for a combination including the multiple values of the first parameter, one or more values of the second parameter, and one value of a fourth parameter to be used for calculation of a maximum number of non-zero coefficients.

3. The terminal according to claim 1, wherein
   the index corresponds to one of a plurality of candidates for a combination including the multiple values of the third parameter, one value of a fourth parameter to be used for calculation of a maximum number of non-zero coefficients, and one value of a fifth parameter indicating the number of frequency domain DFT vectors.

4. The terminal according to claim 1, wherein
   the control section determines, based on a linkage between the multiple values and one or more parameters, at least one of the multiple values and the one or more parameters.

5. A radio communication method for a terminal, the radio communication method comprising:

   receiving an index for channel state information (CSI) reporting of multiple transmission/reception points (TRPs) to be used for coherent joint transmission (CJT); and
   determining, based on the index, multiple values of one parameter among a first parameter related to the number of beams, a second parameter to be used for calculation of the number of frequency domain discrete Fourier transform (DFT) vectors, and a third parameter to be used for calculation of the number of selected CSI-reference signal (RS) ports, the multiple values corresponding to the multiple respective TRPs.

6. A base station comprising:

   a control section that determines, for channel state information (CSI) reporting of multiple transmission/reception points (TRPs) to be used for coherent joint transmission (CJT), multiple values of one parameter among a first parameter related to the number of beams, a second parameter to be used for calculation of the number of frequency domain discrete Fourier transform (DFT) vectors, and a third parameter to be used for calculation of the number of selected CSI-reference signal (RS) ports, the multiple values corresponding to the multiple respective TRPs; and
   a transmitting section that transmits an index corresponding to the multiple values.

Mapping of elements of $i_{2,3,l}$: $k_{l,p}^{(1)}$ to $p_{l,p}^{(1)}$

| $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ | $k_{l,p}^{(1)}$ | $p_{l,p}^{(1)}$ |
|---|---|---|---|---|---|---|---|
| 0 | Reserved | 4 | $\left(\dfrac{1}{2048}\right)^{1/4}$ | 8 | $\left(\dfrac{1}{128}\right)^{1/4}$ | 12 | $\left(\dfrac{1}{8}\right)^{1/4}$ |
| 1 | $\dfrac{1}{\sqrt{128}}$ | 5 | $\dfrac{1}{2\sqrt{8}}$ | 9 | $\dfrac{1}{\sqrt{8}}$ | 13 | $\dfrac{1}{\sqrt{2}}$ |
| 2 | $\left(\dfrac{1}{8192}\right)^{1/4}$ | 6 | $\left(\dfrac{1}{512}\right)^{1/4}$ | 10 | $\left(\dfrac{1}{32}\right)^{1/4}$ | 14 | $\left(\dfrac{1}{2}\right)^{1/4}$ |
| 3 | $\dfrac{1}{8}$ | 7 | $\dfrac{1}{4}$ | 11 | $\dfrac{1}{2}$ | 15 | 1 |

FIG. 1

Mapping of elements of $i_{2,4,l}$: $k_{l,i,f}^{(2)}$ to $p_{l,i,f}^{(2)}$

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | 1 |

FIG. 2

# FIG. 3A

Rel.15/16 Type II Port Selection

# FIG. 3B

| | | | |
|---|---|---|---|
| Port 1 | $b_1$ | $b_1$ | ... |
| Port 2 | $b_2$ | $b_2$ | ... |
| Port 3 | $b_3$ | $b_3$ | ... |
| Port 4 | $b_4$ | $b_4$ | ... |
| Port 5 | $b_5$ | $b_5$ | ... |
| Port 6 | $b_6$ | $b_6$ | ... |
| Port 7 | $b_7$ | $b_7$ | ... |
| Port 8 | $b_8$ | $b_8$ | ... |

Frequency (delay)

FIG. 4A

Rel.17 Type II Port Selection

The Same SD beam
but different FD beam

FIG. 4B

| Port 1 | $b_1f_{1,0}$ | $b_1f_{1,1}$ | ... |
|--------|------|------|-----|
| Port 2 | $b_2f_{2,0}$ | $b_2f_{2,1}$ | ... |
| Port 3 | $b_3f_{3,0}$ | $b_3f_{3,1}$ | ... |
| Port 4 | $b_4f_{4,0}$ | $b_4f_{4,1}$ | ... |
| Port 5 | $b_5f_{5,0}$ | $b_5f_{5,1}$ | ... |
| Port 6 | $b_6f_{6,0}$ | $b_6f_{6,1}$ | ... |
| Port 7 | $b_7f_{7,0}$ | $b_7f_{7,1}$ | ... |
| Port 8 | $b_8f_{8,0}$ | $b_8f_{8,1}$ | ... |

Frequency (delay)

EP 4 672 624 A1

## Codebook parameter configurations for $L$, $\beta$ and $p_v$

| paramCombination-r16 | $L$ | $p_v$ | | $\beta$ |
| --- | --- | --- | --- | --- |
| | | $v \in \{1,2\}$ | $v \in \{3,4\}$ | |
| 1 | 2 | ¼ | 1/8 | ¼ |
| 2 | 2 | ¼ | 1/8 | ½ |
| 3 | 4 | ¼ | 1/8 | ¼ |
| 4 | 4 | ¼ | 1/8 | ½ |
| 5 | 4 | ¼ | ¼ | ¾ |
| 6 | 4 | ½ | ¼ | ½ |
| 7 | 6 | ¼ | - | ½ |
| 8 | 6 | ¼ | - | ¾ |

FIG. 5

Codebook parameter configurations for $\alpha$, $M$ and $\beta$

| paramCombination-r17 | M | $\alpha$ | $\beta$ |
|---|---|---|---|
| 1 | 1 | ¾ | ½ |
| 2 | 1 | 1 | ½ |
| 3 | 1 | 1 | ¾ |
| 4 | 1 | 1 | 1 |
| 5 | 2 | ½ | ½ |
| 6 | 2 | ¾ | ½ |
| 7 | 2 | 1 | ½ |
| 8 | 2 | 1 | ¾ |

FIG. 6

FIG. 7A

Separate table for $\{L_1,...,L_{N\_TRP}\}$

| Index | $L_1$ | $L_2$ | $L_3$ | $L_4$ |
|-------|-------|-------|-------|-------|
| 1 | | | | |
| 2 | | | | |
| ... | | | | |
| M | | | | |

FIG. 7B

Separate table for $\{p_v,\beta\}$

| Index | $p_v$ | $\beta$ |
|-------|-------|---------|
| 1 | | |
| 2 | | |
| ... | | |
| N | | |

FIG. 8A

Example 0-1
Separate table for $\{L_1,...,L_{N\_TRP}\}$

| Index | $L_1$ | $L_2$ | $L_3$ | $L_4$ |
|-------|------|------|------|------|
| 1 | 4 | 4 | 4 | 4 |
| 2 | 4 | 4 | 2 | 2 |
| ... | | | | |
| M | 4 | 2 | 2 | 2 |

FIG. 8B

Example 0-2
Separate table for $\{L_1,...,L_{N\_TRP}\}$

| Index | $L_1$ | $L_2$ | $L_3$ | $L_4$ |
|-------|------|------|------|------|
| 1 | 6 | 6 | 2 | 2 |
| 2 | 6 | 4 | 2 | 2 |
| ... | | | | |
| M | 4 | 2 | 2 | 2 |

## FIG. 9A

Example 1-1
Joint table (P<M*N)

| Index | $L_1$ | $L_2$ | $L_3$ | $L_4$ | $p_v$ | $\beta$ |
|-------|-------|-------|-------|-------|-------|---------|
| 1     |       |       |       |       |       |         |
| 2     |       |       |       |       |       |         |
| ...   |       |       |       |       |       |         |
| P     |       |       |       |       |       |         |

## FIG. 9B

Example 1-2
Linkage between $\{L_1,...,L_{N\_TRP}\}$ and $\{p_v,\beta\}$

| Linkage index | Index from $\{L_1,...,L_{N\_TRP}\}$ table | Index from $\{p_v,\beta\}$ table |
|---------------|---------------------------------------|-------------------------------|
| 1             |                                       |                               |
| 2             |                                       |                               |
| ...           |                                       |                               |
| ...           |                                       |                               |

## FIG. 9C

Example 1-3
Linkage between $\{L_1,...,L_{N\_TRP}\}$ and $\{p_v,\beta\}$

| Index from $\{L_1,...,L_{N\_TRP}\}$ table | Index from $\{p_v,\beta\}$ table |
|----------------------------------------|-------------------------------|
| 1,2,3,5,6,8                            | 1                             |
| 3,5,7,9                                | 2                             |
| 3,5,7,9                                | 3                             |
| ...                                    | ...                           |

FIG. 10A

Restriction of max allowed sum value of $L_n$

| Max allowed sum value | Index from $\{p_v, \beta\}$ table |
|---|---|
| 20 | 1 |
| 12 | 2 |
| 12 | 3 |
| ... | ... |

FIG. 10B

Restriction of specific allowed sum value of $L_n$

| Specific allowed sum value | Index from $\{p_v, \beta\}$ table |
|---|---|
| 4,8,12,16,18,20 | 1 |
| 4,8,12 | 2 |
| 4,8 | 3 |
| ... | ... |

FIG. 11A

Separate table for $\{p_{v,1},...,p_{v,N\_TRP}\}$

| Index | $p_{v,1}$ | $p_{v,2}$ | $p_{v,3}$ | $p_{v,4}$ |
|-------|-----------|-----------|-----------|-----------|
| 1 | | | | |
| 2 | | | | |
| ... | | | | |
| M | | | | |

FIG. 11B

Linkage between $\{p_{v,1},...,p_{v,N\_TRP}\}$ and $\beta$

| Index from $\{p_{v,1},...,p_{v,N\_TRP}\}$ table | Value of $\beta$ |
|-----------------------------------------------|------------------|
| | |
| | |
| | |
| | |

FIG. 12A

Joint table for $\{p_{v,1},...,p_{v,N\_TRP},\beta\}$

| Index | $p_{v,1}$ | $p_{v,2}$ | $p_{v,3}$ | $p_{v,4}$ | $\beta$ |
|-------|-----------|-----------|-----------|-----------|---------|
| 1 | | | | | |
| 2 | | | | | |
| ... | | | | | |
| M | | | | | |

FIG. 12B

Linkage between $\{L_1,...,L_{N\_TRP}\}$ and $\{p_{v,1},...,p_{v,N\_TRP},\beta\}$

| Index from $\{L_1,...,L_{N\_TRP}\}$ table | Index from $\{p_{v,1},...,p_{v,N\_TRP},\beta\}$ table |
|-------------------------------------------|-------------------------------------------------------|
| 2,3,4,5,6,7 | 1 |
| 6,7,8,9 | 2 |
| 10,11 | 3 |
| ... | ... |

Joint table for $\{L_1,...,L_{N\_TRP},p_{v,1},...,p_{v,N\_TRP},\beta\}$

| Index | $L_1$ | ... | $L_{N\_TRP}$ | $p_{v,1}$ | ... | $p_{v,N\_TRP}$ | $\beta$ |
|-------|-------|-----|--------------|-----------|-----|----------------|---------|
| 1 | | | | | | | |
| 2 | | | | | | | |
| ... | | | | | | | |
| M | | | | | | | |

FIG. 13

FIG. 14

FIG. 15

EP 4 672 624 A1

FIG. 16

BASE STATION 10, USER TERMINAL 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 17

FIG. 18

## INTERNATIONAL SEARCH REPORT

| | International application No. |
|---|---|
| | **PCT/JP2023/006745** |

**A. CLASSIFICATION OF SUBJECT MATTER**

*H04B 7/022*(2017.01)i; *H04B 7/0456*(2017.01)i
FI: H04B7/022; H04B7/0456 400

According to International Patent Classification (IPC) or to both national classification and IPC

**B. FIELDS SEARCHED**

Minimum documentation searched (classification system followed by classification symbols)

H04B7/022; H04B7/0456

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | NTT DOCOMO, INC. Discussion on CSI enhancement[online], 3GPP TSG RAN WG 1 #112 R 1-2301479, 17 February 2023 <br> section 2 | 1-6 |
| Y | JP 2022-543477 A (SAMSUNG ELECTRONICS CO., LTD.) 12 October 2022 (2022-10-12) <br> claim 6, paragraphs [0088], [0136], [0145] | 1-6 |
| Y | WO 2021/148629 A1 (FRAUNHOFER-GESELLSCHAFT ZUR F#RDERUNG DER ANGEWANDTEN FORSCHUNG E.V.) 29 July 2021 (2021-07-29) <br> p. 44, lines 8-14 | 1-6 |
| A | NOKIA, NOKIA SHANGHAI BELL. CSI enhancement for high/medium UE velocities and CJT[online], 3GPP TSG RAN WG 1 #109-e R 1-2204540, 20 May 2022 <br> section 3 | 1-6 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/006745**

| Patent document cited in search report | | | Publication date (day/month/year) | Patent family member(s) | | | Publication date (day/month/year) |
|---|---|---|---|---|---|---|---|
| JP | 2022-543477 | A | 12 October 2022 | US | 2021/0044340 | A1 | |
| | | | | claim 1, paragraphs [0106], [0182], [0191] | | | |
| | | | | WO | 2021/025538 | A1 | |
| | | | | KR | 10-2021-0018781 | A | |
| | | | | CN | 114342278 | A | |
| WO | 2021/148629 | A1 | 29 July 2021 | US | 2022/0385344 | A1 | |
| | | | | EP | 3855635 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010